(19) Europäisches Patentamt
European Patent Office
Office européen des brevets

(11) **EP 2 215 492 B1**

(12) **FASCICULE DE BREVET EUROPEEN**

(45) Date de publication et mention
de la délivrance du brevet:
**12.10.2011 Bulletin 2011/41**

(21) Numéro de dépôt: **08852447.5**

(22) Date de dépôt: **21.11.2008**

(51) Int Cl.:
*G01S 3/74* *(2006.01)*    *G01S 5/12* *(2006.01)*

(86) Numéro de dépôt international:
**PCT/EP2008/066027**

(87) Numéro de publication internationale:
**WO 2009/065943 (28.05.2009 Gazette 2009/22)**

(54) **PROCÈDE DE LOCALISATION AOA-TDOA MULTI-EMETTEURS ET MULTI-TRAJETS COMPRENANT UN SOUS-PROCEDE DE SYNCHRONISATION ET D'EGALISATION DES STATIONS DE RECEPTIONS**

VERFAHREN ZUR MEHRSENDER- UND MEHRWEGE-AOA-TDOA-LOKALISIERUNG, MIT EINEM SUBVERFAHREN ZUM SYNCHRONISIEREN UND ENTZERREN DER EMPFANGSSTATIONEN

METHOD OF MULTI-TRANSMITTER AND MULTI-PATH AOA-TDOA LOCATION COMPRISING A SUB-METHOD FOR SYNCHRONIZING AND EQUALIZING THE RECEIVING STATIONS

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **23.11.2007 FR 0708219**

(43) Date de publication de la demande:
**11.08.2010 Bulletin 2010/32**

(73) Titulaire: **THALES**
**92200 Neuilly-sur-Seine (FR)**

(72) Inventeurs:
• **FERREOL, Anne**
**F-92000 Colombes (FR)**
• **MORGAND, Philippe**
**F-91207 Athis-Mons (FR)**

(74) Mandataire: **Dudouit, Isabelle**
**Marks & Clerk France**
**Conseils en Propriété Industrielle**
**Immeuble " Visium "**
**22, avenue Aristide Briand**
**94117 Arcueil Cedex (FR)**

(56) Documents cités:
**EP-A- 0 926 510    US-A1- 2003 129 996**

• **CONG L ET AL: "Nonline-of-Sight Error Mitigation in Mobile Location" IEEE TRANSACTIONS ON WIRELESS COMMUNICATIONS, IEEE SERVICE CENTER, PISCATAWAY, NJ, US, vol. 4, no. 2, 1 mars 2005 (2005-03-01), pages 560-573, XP011129335 ISSN: 1536-1276**
• **LI CONG ET AL: "Hybrid TDOA/AOA Mobile User Location for Wideband CDMA Cellular Systems" IEEE TRANSACTIONS ON WIRELESS COMMUNICATIONS, IEEE SERVICE CENTER, PISCATAWAY, NJ, US, vol. 1, no. 3, 1 juillet 2002 (2002-07-01), XP011080873 ISSN: 1536-1276**
• **CASTANEDA N ET AL: "A New Approach for Mobile Localization in Multipath Scenarios" COMMUNICATIONS, 2007. ICC '07. IEEE INTERNATIONAL CONFERENCE ON, IEEE, PI, 1 juin 2007 (2007-06-01), pages 4680-4685, XP031126406 ISBN: 978-1-4244-0353-0**

**Description**

L'invention concerne un procédé et un système permettant de localiser plusieurs émetteurs en présence de réflecteurs à partir de plusieurs stations de réception avec synchronisation des stations de réception.

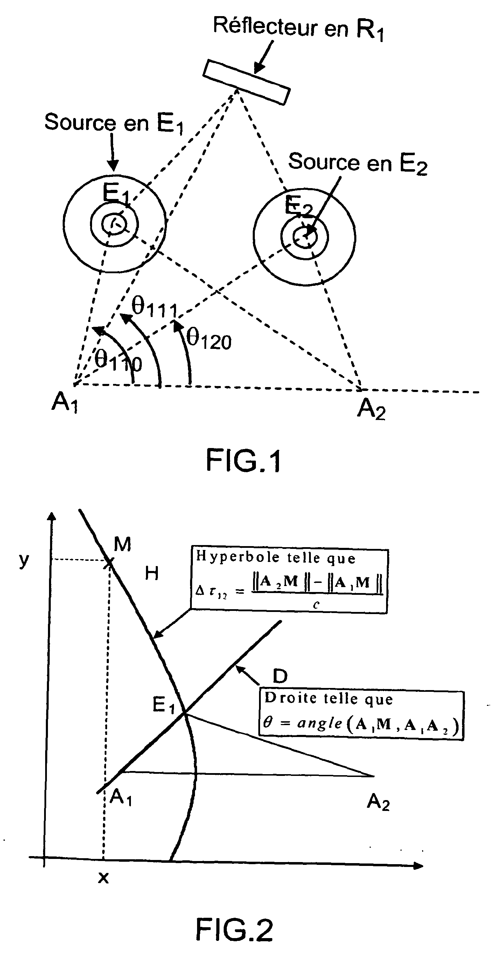

L'invention concerne la localisation de plusieurs émetteurs en présence de réflecteurs à partir de plusieurs stations. La figure 1 donne un exemple de système de localisation avec 2 stations de réception de position $A_1$ et $A_2$ en présence de deux émetteurs de position $E_1$ et $E_2$ et un réflecteur en $R_1$. D'après la figure 1, la station en $A_i$ reçoit le trajet direct de l'émetteur $E_m$ sous l'incidence $\theta_{mi0}$ et le trajet réfléchit associé au réflecteur $R_j$ sous l'incidence $\theta_{mij}$. La localisation des émetteurs nécessite non seulement l'estimation des angles incidence $\theta_{mij}$ (**AOA** abréviation anglo-saxonne de « Angle of Arrival ») mais aussi l'estimation des différences de temps d'arrivée ou **TDOA** (Time Difference of Arrival) associés $\tau_{mi1j}$ - $\tau_{mi2j}$ entre les stations $A_{i1}$ et $A_{i2}$. La figure 2 montre que la localisation AOA/TDOA d'un émetteur en $E_1$ avec les stations de position $A_1$ et $A_2$, consiste à estimer tout d'abord sa direction $\theta$ pour former une droite puis à estimer la différence de temps d'arrivée $\Delta\tau_{12}$ du signal émis entre les deux stations pour former une hyperbole H. L'émetteur se trouve alors à l'intersection de la droite D de direction $\theta$ et de l'hyperbole H.

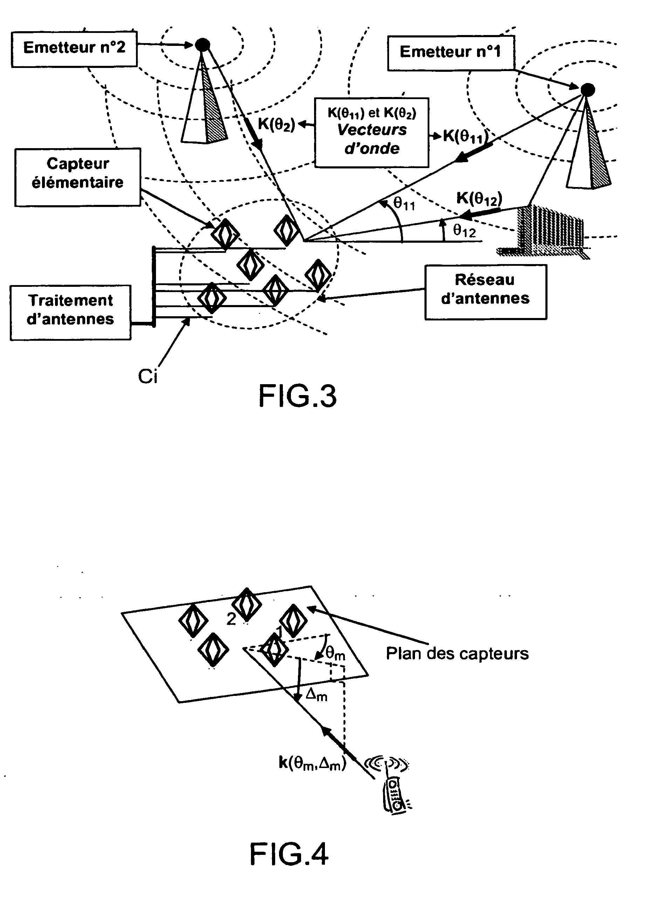

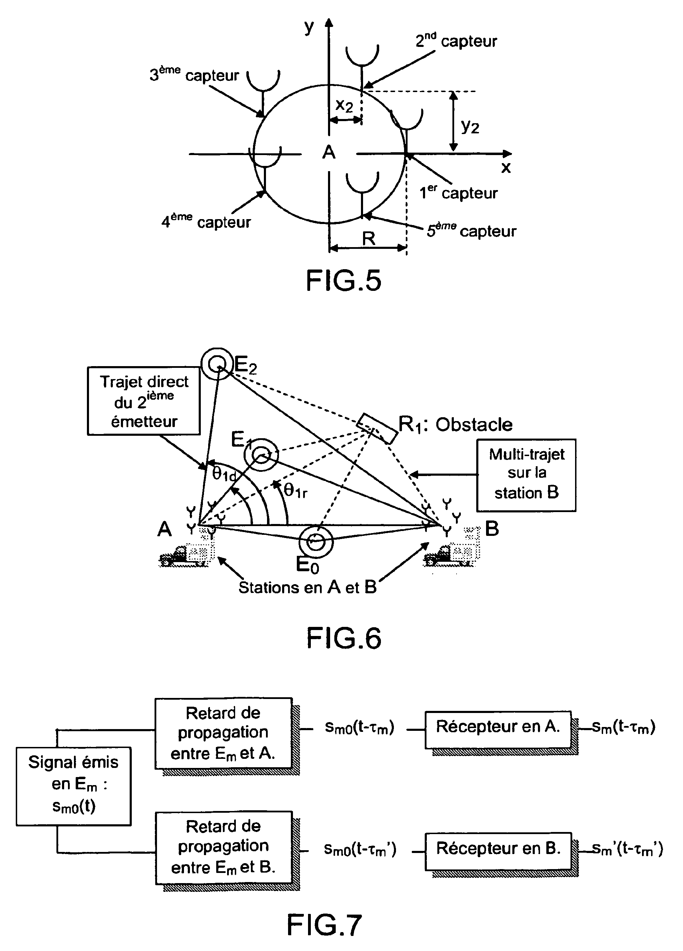

Sachant qu'une station de réception est composée d'un ou plusieurs récepteurs, l'invention concerne aussi le traitement d'antennes qui traite les signaux de plusieurs sources émettrices à partir de systèmes de réception multi-capteurs. Dans un contexte électromagnétique les capteurs Ci sont des antennes et les sources radio-électriques se propagent suivant une polarisation donnée. Dans un contexte acoustique les capteurs Ci sont des microphones et les sources sont sonores. La figure 3 montre qu'un système de traitement d'antennes est composé d'un réseau de capteurs recevant des sources avec des angles d'arrivées $\theta_{mp}$ différents. Les capteurs élémentaires du réseau reçoivent les signaux des sources pouvant être soit le trajet direct émis par un émetteur soit son trajet réfléchi avec une phase et une amplitude dépendant en particulier de leurs angles d'incidences et de la position des capteurs de réception. Sur la figure 5 est représenté un réseau de capteurs particulier où les coordonnées de chaque capteur sont $(x_n, y_n)$.

Les angles d'incidences sont paramétrés en 1D par l'azimut $\theta_m$ et en 2D par l'azimut $\theta_m$ et l'élévation $\Delta_m$. D'après la figure 4, une goniométrie 1D est définie par des techniques qui estiment uniquement l'azimut en supposant que les ondes des sources se propagent dans le plan du réseau de capteurs. Lorsque la technique de goniométrie estime conjointement l'azimut et l'élévation d'une source, elle correspond à une goniométrie 2D.

Les techniques de traitement d'antennes ont pour objectif principal d'exploiter la diversité spatiale qui consiste à utiliser la position des antennes du réseau pour mieux exploiter les différences en incidence et en distance des sources.

L'un des problèmes technique à résoudre dans ce domaine est celui de la localisation des émetteurs consistant à déterminer leurs coordonnées, qui sera envisagée en 2 dimensions ou 2D, dans le plan et/ou en 3 dimensions ou 3D, dans l'espace, à partir de mesures de type AOA et/ou TDOA. La localisation multi-émetteurs nécessite une association par émetteur, des paramètres de type AOA/TDOA, d'où une estimation conjointe des paramètres AOA/TDOA. Le domaine de l'estimation AOA en présence de multi-émetteurs et multi-trajets à partir d'une station de réception multi-voies est très vaste, dans l'art antérieur. Celui de l'estimation TDOA est tout aussi vaste que celui de l'AOA avec en particulier les techniquesconnues de l'art antérieur. Toutefois, la mesure est effectuée dans la plupart du temps à partir de deux signaux issus de deux stations mono-voie. Ces techniques sont alors peu robustes en situation multi-émetteurs ou multi-trajets. C'est pourquoi l'art antérieur propose des techniques TDOA permettant de séparer les sources à partir d'une connaissance a priori sur leurs caractéristiques cycliques.

L'estimation conjointe AOA/TDOA a généré un grand nombre de références dans l'art antérieur. Ces travaux sont beaucoup plus récents que les précédents sur le TDOA et sont dus essentiellement à l'avènement des systèmes de radio-communications cellulaires comme l'indique de façon explicite selon l'art antérieur. Contrairement aux références précédentes du TDOA, les traitements sont effectués avec des stations de réceptions multi-voies. Toutefois l'objectif est de réaliser l'analyse paramétrique d'un canal à multi-trajets d'un seul émetteur $E_1$ vers une station de réception multi-voies en $A_1$. Les paramètres estimés conjointement sont alors les angles d'arrivées $\theta_{11j}$ et les écarts en temps $\tau_{11j}$ - $\tau_{11j'}$ entre les trajets de ce même émetteur dus à des réflecteurs en $R_j$ et $R_{j'}$. Ce genre de système ne permet pas de réaliser la localisation de l'émetteur en $E_1$ tel que cela est envisagé dans la figure 1, sauf si les positions des réflecteurs en $R_j$ et $R_{j'}$ sont connues. L'estimation conjointe des paramètres $(\theta_{11j}, \tau_{11j}$ - $\tau_{11j'})$ est très souvent envisagée à partir de la connaissance d'un signal pilote tel que les codes de séquence TSC **(Training Sequence Code)** pour le GSM (Global System Mobile) ou les codes d'étalement pour les signaux de type CDMA (Code Division Multiple Access).

Les techniques d'estimation TOA (Time Of Arrival) connues de l'art antérieur ont été envisagées pour la localisation des mobiles dans les systèmes de radio-communications cellulaires et pour la localisation de récepteurs de radio-navigation de type GPS/GALILEO pour Global Positioning System. Ces techniques d'estimations sont effectuées à partir de la connaissance d'un signal pilote et peuvent être réalisées avec des stations de réception multi-voies. La localisation nécessite souvent la démodulation de signaux émis qui renvoie, par exemple, la position des satellites dans GPS/GALILEO et permet la localisation du récepteur à partir de la connaissance de la position des satellites ainsi que l'estimation du TOA sur chacun des satellites. Les techniques TOA d'estimation et de localisation nécessitent alors une connaissance précise du fonctionnement et des caractéristiques du système de radio-navigation ou de radio-communications mais elles ne permettent pas de réaliser une localisation dans le cas général sans connaissance à priori de type système ou de type signal.

La localisation d'un émetteur à partir des paramètres AOA/TDOA a suscité une bibliographie importante. Ces techniques de traitement de données sont généralement adaptées à des situations mono-émetteur et envisagent parfois des problématiques de pistage (ou tracking) lorsque, l'émetteur est en mouvement ou encore l'une des stations de réception est volontairement en mouvement. Dans ce domaine de nombreuses références utilisent le filtrage de Kalman. Toutefois ces techniques de localisation ne traitent pas le cas de mesures TDOA effectuées sur des stations de réceptions asynchrones.

Dans l'art antérieur les auteurs proposent une estimation directe de la position des émetteurs à partir de l'ensemble des signaux provenant de toutes les voies de réception de toutes les stations. Dans ce papier, les auteurs traitent la problématique du multi-sources par des algorithmes connus de l'art antérieur. Il estime directement les positions des émetteurs par une approche de traitement d'antennes. Toutefois il suppose que les signaux ont tous la même largeur de bande et que les signaux provenant des différentes stations sont synchrones. Cette approche ne permet pas toutefois de traiter la problématique des multi-trajets générés par des réflecteurs et le problème de l'asynchronisme entre les différentes stations.

L'objet de l'invention concerne un procédé pour localiser un ou plusieurs émetteurs Ei en présence potentiel d'obstacles Rp dans un réseau comprenant au moins une première station de réception A et une seconde station de réception de B asynchrone à A caractérisé en ce qu'il comporte au moins les étapes suivantes :

- L'identification d'un émetteur de référence de position connue $E_0$ par un calcul du couple AOA-TDOA ($\theta_{ref}, \Delta\tau_{ref}$) à partir de la connaissance de la position E0 de l'émetteur de référence et de celles des stations A et B,
- Une estimation de la direction d'arrivée du ou des émetteurs et des réflecteurs (ou estimation de l'AOA) sur la première station A,
- La séparation des signaux reçus sur la première station A par filtrage spatial dans la direction de la source (émetteurs et/obstacles),
- La séparation des incidences provenant des émetteurs de celles provenant des obstacles par inter-corrélation des signaux issus du filtrage spatial en A,
- L'estimation de la différence de temps d'arrivée ou TDOA d'une source (émetteurs et/obstacles) par inter-corrélation du signal de la source (émetteurs et/obstacles) reçue en A avec les signaux reçus sur la deuxième station de réception B : pour chaque source émetteur Ei (ou obstacles Rj) un couple (AOA,TDOA) est alors obtenu,
- Une synthèse des mesures des couples (AOAi, TDOAi) de chaque source (Ei, Rp) afin de dénombrer les sources et de déterminer les moyennes et écart type de leurs paramètres AOA et TDOA,
- La détermination de l'erreur de synchronisme entre les stations de réception A et B en utilisant l'émetteur de référence $E_0$, puis la correction de cette erreur sur tous les TDOAi des couples (AOAi, TDOAi) issus de la synthèse,
- La détermination de l'erreur d'orientation du réseau en A en utilisant l'émetteur de référence $E_0$, puis la correction de cette erreur sur tous les AOAi des couples (AOAi, TDOAi) issus de la synthèse,
- La localisation des différents émetteurs à partir de chaque couple (AOAi, TDOAi).

D'autres caractéristiques et avantages de la présente invention apparaîtront mieux à la lecture de la description qui suit d'un exemple de réalisation donné à titre illustratif, nullement limitatif, annexé des figures qui représentent :

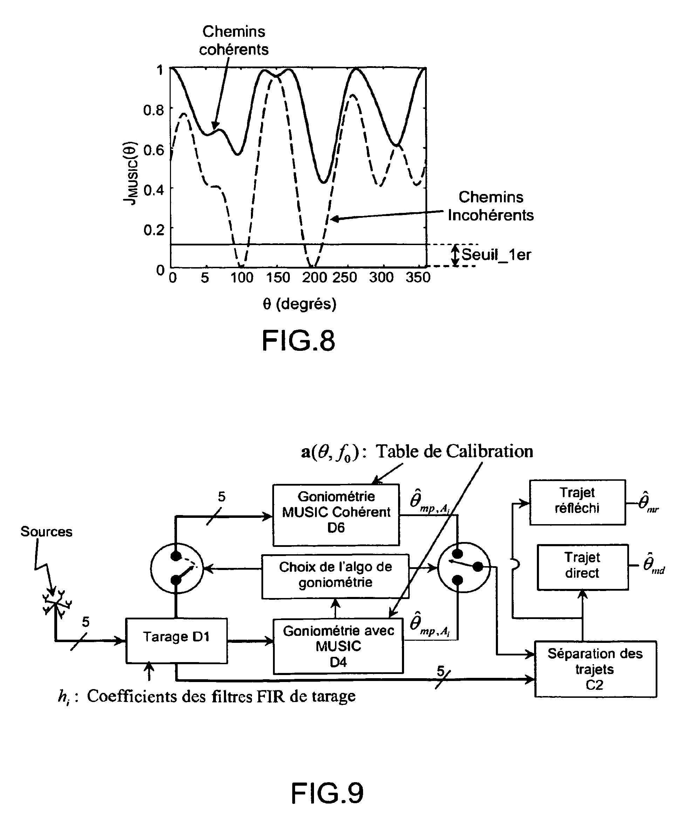

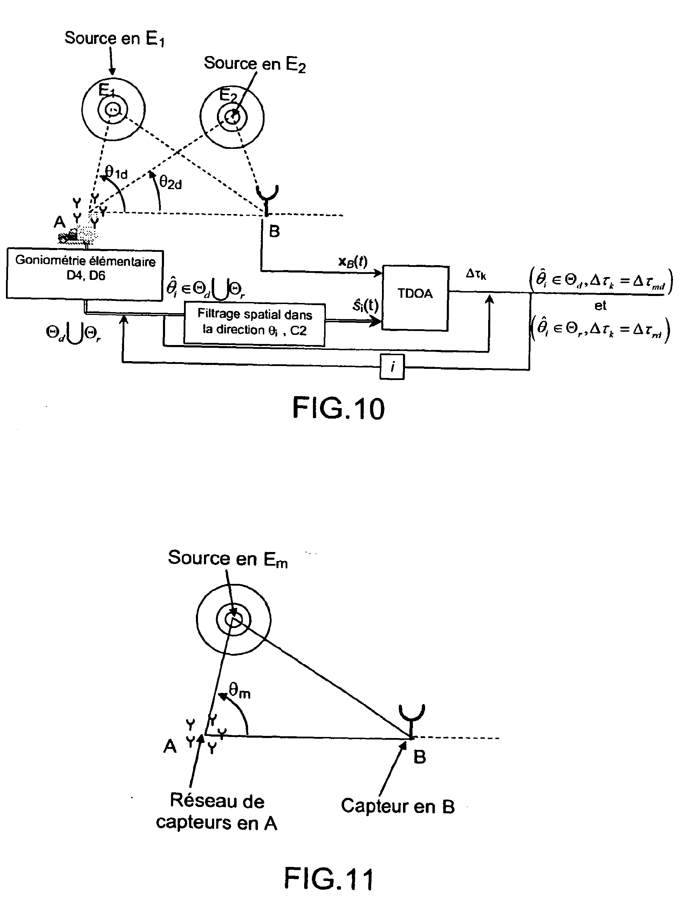

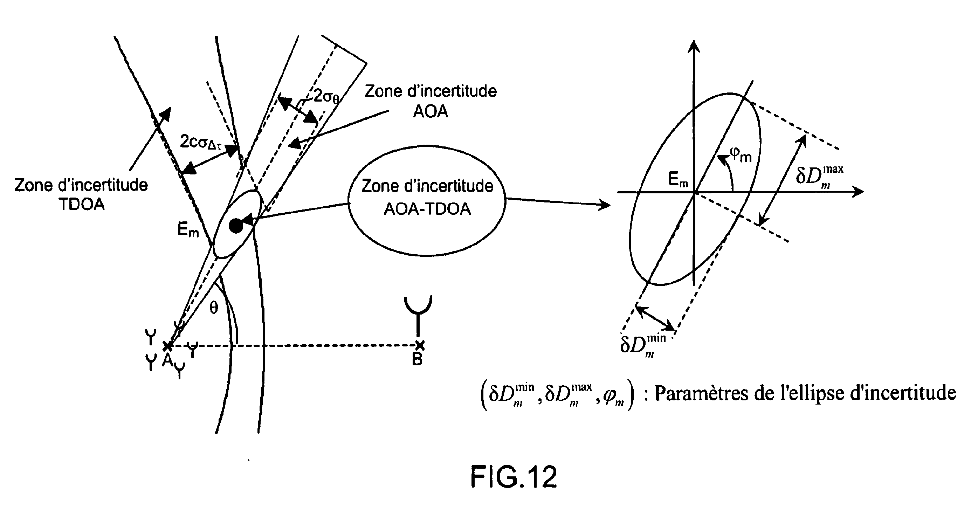

o La figure 1, un système de localisation comprenant des stations de réception en Ai et des émetteurs en $E_m$,
o La figure 2, un exemple de localisation AOA/TDOA en présence d'un émetteur,
o La figure 3, un schéma d'émetteur se propageant vers un réseau de capteurs,
o La figure 4, les incidences ($\theta_m, \Delta_m$) d'une source,
o La figure 5, un exemple d'un réseau de capteurs de position (xn, yn),
o La figure 6, un système de localisation à partir des stations A et B en présence de plusieurs émetteurs et trajets,
o La figure 7, la distorsion du signal émis entre les récepteurs en A et en B,
o La figure 8, le critère de MUSIC en présence de multi-trajets cohérents (courbe rouge) et de sources non cohérentes (courbe verte), pour des directions de multi-trajets $\theta_{11}$=100˚ et $\theta_{12}$=200˚, le réseau de $N$=5 capteurs est circulaire avec un rayon de 0.5$\lambda$,
o La figure 9, un exemple de procédé de Goniométrie élémentaire prenant en compte des situations de trajets cohérents,
o La figure 10, une illustration de procédé d'estimation AOA-TDOA élémentaire,
o La figure 11, une représentation de la technique pour la localisation AOA-TDOA de l'émetteur en position E, et
o La figure 12, l'ellipse d'incertitude de la localisation AOA-TDOA.

La figure 6 représente un système de localisation selon l'invention comportant par exemple les éléments suivants :

 o M émetteurs E$_m$ de positions inconnues,
 o P réflecteurs R$_p$ de positions inconnues,
 o une station de réception multi-voies en A. La station A comprend un réseau de capteurs car elle assure la fonction de goniométrie. L'orientation de l'antenne du goniomètre en A est par exemple connu approximativement à Δθ=15˚ près. Ceci correspond à la précision typique d'une boussole magnétique,
 o une station de réception mono ou multi-voies en B ayant au moins un capteur de réception,
 o un émetteur de référence en E$_0$ dont la position est connue. Le signal émis par cet émetteur possède une bande d'émission du même ordre de grandeur que celle des récepteurs en A et B.

Les différents paramètres du système de localisation sont donnés en figure 6. Dans ce système, un des objectifs de la localisation est de déterminer la position des M émetteurs E$_m$ de positions inconnues. En résumé, le procédé selon l'invention exécute au moins les étapes suivantes :

- Une goniométrie (ou estimation de l'AOA) des émetteurs Em et des réflecteurs Rp sur la station A,
- Une séparation des signaux émis par filtrage spatial dans la direction de la source (émetteur ou réflecteur),
- L'estimation de la différence de temps d'arrivée ou du TDOA d'une source en inter-corrélant le signal d'une source en sortie du filtrage spatial en A avec les signaux reçus en B : pour chaque source ( émetteur Ei ou réflecteur Rj) un couple (AOA, TDOA) est obtenu. Cette technique d'inter-corrélation permettant d'estimer le TDOA, s'effectuera conjointement avec le « tarage » à distance des récepteurs en B, par exemple.
- Une synthèse des mesures des couples (AOA, TDOA) de chaque source sera effectuée afin de dénombrer les émetteurs Em et les réflecteurs Rp correspondant aux obstacles et de donner des statistiques, tels que les moyennes et écart type associés à la précision d'estimation des paramètres AOA et TDOA.
- L'identification de l'émetteur de référence E0 par une technique AOA parmi les couples (AOA, TDOA) issus de la synthèse. Connaissant la position de l'émetteur de référence E$_0$, le calcul de l'erreur de synchronisme entre les stations A et B puis la correction de cette erreur sur tous les TDOA des couples (AOA, TDOA) issus de la synthèse. Connaissant la position de l'émetteur de référence E$_0$, le calcul de l'erreur d'orientation de la station A puis la correction de cette erreur sur tous les AOA des couples (AOA, TDOA) issus de la synthèse.
- La localisation des différents émetteurs et réflecteurs à partir de chaque couple (AOA, TDOA) et l'établissement de l'ellipse d'incertitude à partir des mesures d'écart type de ces paramètres pour chacun des émetteurs et des réflecteurs.
- L'erreur de calibration impactant sur la goniométrie est connue,
- Le nombre K de tranches temporelles de durée T sur lequel sera effectuée une estimation conjointe des couples de paramètres AOA-TDOA est choisi. De manière plus détaillée, le procédé mis en oeuvre par l'invention est décrit ci-après.

**Modélisation du Signal sur la station A**

En présence de *M* émetteurs et *P* obstacles ou réflecteurs, le signal reçu en sortie des *N* capteurs en *A* s'écrit de la façon suivante d'après la figure 6.

$$\mathbf{x}(t) = \sum_{m=1}^{M} \mathbf{a}(\theta_{md})\, s_m(t - \tau_m) + \sum_{p=1}^{P} \mathbf{a}(\theta_{pr})\, b_p(t) + \mathbf{n}(t) \qquad\qquad (1)$$

où $s_m(t)$ est le signal du m-ième émetteur, $\theta_{md}$ et $\theta_{pr}$ sont respectivement les directions d'arrivée du trajet direct et d'un trajet réfléchi et $\tau_m$ est le Temps d'arrivée (TOA : Time Of Arrival) du *m*-ième émetteur tel que

$$\tau_m = \frac{\|\mathbf{E}_m\mathbf{A}\|}{c} \qquad\qquad .(2)$$

où $\|\mathbf{AB}\|$ est la distance entre les points A et B. Le signal $b_p(t)$ est associé au *p*-ième obstacle et vérifie :

$$b_p(t) = \sum_{m=1}^{M} \rho_{mp} \, s_m(t - \tau_{mp}) \qquad .(3)$$

où $\tau_{mp}$ est le TOA du multi-trajet de la $m$-ième source tel que :

$$\tau_{mp} = \frac{\|\mathbf{E}_m \mathbf{R}_p\| + \|\mathbf{R}_p \mathbf{A}\|}{c} \qquad .(4)$$

et $\rho_{mp}$ est l'atténuation du multi-trajet de la $m$-ième source provoquée par le $p$-ième obstacle. Le signal du trajet direct $s_m(1\text{-}\tau_m)$ est corrélé avec le signal $b_p(t)$ provenant de l'obstacle de la façon suivante

$$r_{mp} = \frac{\left| E\left[ s_m(t - \tau_m) \, b_p(t)^* \right] \right|}{\sqrt{E\left[ |s_m(t - \tau_m)|^2 \right] E\left[ |b_p(t)|^2 \right]}} = \frac{\rho_{mp} \, r_{s_m}(\tau_{mp} - \tau_m)}{\sqrt{r_{s_m}(0) \left( \sum_{i=1}^{M} |\rho_{ip}|^2 \, r_{s_i}(0) \right)}} \qquad .(5)$$

où $r_{sm}(\tau) = E[s_m(t) s_m(t-\tau)^*]$ est la fonction d'auto-corrélation du signal $s_m(t)$ et $r_{mp}$ est un coefficient normalisé entre 0 et 1 donnant le taux de corrélation entre $s_m(t-\tau_m)$ et $b_p(t)$. Lorsque la bande passante du $m$-ième émetteur vaut $B_m$, la fonction $r_{sm}(\tau)$ peut s'écrire

$$r_{s_m}(\tau) = \gamma_m \frac{\sin(\pi B_m \tau)}{\pi B_m \tau} \quad \text{avec} \quad \gamma_m = E\left[ |s_m(t)|^2 \right] \qquad .(6)$$

Lorsque $M=P=1$, l'expression de $r_{s1b1}$ s'écrit de la façon suivante d'après (2)(4)(5)(6)

$$r_{11} = \frac{\left| r_{s_1}(\tau_{11} - \tau_1) \right|}{r_{s_1}(0)} = \sin c\left( \pi \frac{B_1 D_{11}}{c} \right) \quad \text{avec} \quad D_{mp} = \|\mathbf{E}_m \mathbf{R}_p\| + \|\mathbf{R}_p \mathbf{A}\| - \|\mathbf{E}_m \mathbf{A}\| \qquad .(7)$$

où $\sin c(x) = \sin(x)/x$. Lorsque $x$ est petit cette dernière fonction devient $\sin c(x) \approx 1 - x^2/6$. Dans ces conditions et d'après (5)(7), le niveau de corrélation $r_{mp}$ dépend de la distance $D_{mp}$: $r_{mp} \approx 1 - (\pi B_m D_{mp}/c)^2/6$ de la façon suivante :

Inversement $\quad D_{mp} = c/(\pi B_m)\sqrt{6(1 - r_{mp})}$. en utilisant les expressions précédentes, les multi-trajets peuvent être classés dans les trois catégories suivantes :

Cas décorrélés : $r_{mp} \approx 0$ tel que $D_{mp} > c/B_m$

Cas corrélés : $0 < r_{mp} < r_{max}$ tel que $\quad c/B_m < D_{mp} < c/(\pi B_m)\sqrt{6(1 - r_{max})}$

Cas cohérent : $r_{mp} > r_{max}$ tel que $\quad D_{mp} > c/(\pi B_m)\sqrt{6(1 - r_{max})}$

En pratique $r_{max} = 0.9$ est une valeur typique de corrélation pour séparer les cas de multi-trajets cohérents des cas de multi-trajets corrélés. Le tableau suivant donne alors les limites de distance entre trajets pour obtenir des trajets cohérents.

Tableau 1 - Limite de distance pour obtenir des trajets cohérents

| $B_m$ (MHz) | 300kHz | 1 MHz | 10MHz |
|---|---|---|---|
| *Distance limite pour Obtenir des chemins cohérents* | < 246m | < 74m | < 7m |

**Modélisation du Signal sur la station B**

L'expression du signal reçu sur les capteurs ou récepteurs de la station B est similaire à celui de l'équation (1). Toutefois :

- Les angles d'incidences des émetteurs Em et des obstacles ou réflecteur Rp sont différents : $\theta_{md}$' et $\theta_{pr}$' au lieu de $\theta_{md}$ et $\theta_{pr}$
- Les instants d'arrivées (TOA) des émetteurs Em et des obstacles Rp sont différents : $\tau_m$' et $\tau_{mp}$' au lieu de $\tau_m$ et $\tau_{mp}$ où

$$\tau_m ' = \frac{\|\mathbf{E}_m \mathbf{B}\|}{c} \quad \text{et} \quad \tau_{mp}' = \frac{\|\mathbf{E}_m \mathbf{R}_p\| + \|\mathbf{R}_p \mathbf{B}\|}{c} \qquad .(8)$$

D'autre part, le signal du trajet direct en sortie des récepteurs B s'écrit $s_m'(t-\tau_m')$. Notant que ce signal s'écrit $s_m(t-\tau_m)$ en sortie des récepteurs de la station A, la différence entre les signaux $s_m(t)$ et $s_m'(t)$ est due à la différence des gabarits en fréquence (terme connu dans le domaine) des récepteurs des stations A avec ceux de la station B. Cette distorsion provoquée par des récepteurs de nature différente est illustrée à la figure 7.

Pour être plus précis, en présence de *M* émetteurs et *P* obstacles ou réflecteurs, le signal reçu en sortie des *N* capteurs en B s'écrit de la façon suivante d'après la figure 6

$$\mathbf{x}_B(t) = \sum_{m=1}^{M} \mathbf{a}(\theta_{md}') \, s_m '(t - \tau_m ') + \sum_{p=1}^{P} \mathbf{a}(\theta_{pr}') \, b_p '(t) + \mathbf{n}_B(t) \qquad .(9)$$

où $s_m'(t)$ est le signal of du m-ième émetteur, $\theta_{md}$' et $\theta_{pr}$' sont respectivement les directions d'arrivée du trajet direct et du trajet réfléchis et $\tau_m$' est le Temps d'arrivée (TOA : Time Of Arrival) du *m*-ième émetteur dont l'expression est donnée équation (8). Le signal $b_p'(t)$ est associé au *p*-ième obstacle et vérifie

$$b_p '(t) = \sum_{m=1}^{M} \rho_{mp}' \, s_m '(t - \tau_{mp} ') \qquad (10)$$

où $\tau_{mp}$' est le TOA du multi-trajet de la *m*-ième source de l'équation (8) et $\rho_{mp}$' est l'atténuation du multi-trajet de la *m*-ième source provoquée par le *p*-ième obstacle (ou réflecteur).

**Modules élémentaires d'estimation AOA et TDOA**

Goniométrie ou Estimation de l'angle d'arrivée AOA

Les algorithmes de goniométrie ou d'estimation AOA doivent traiter le cas de la multi-émission. Dans l'objectif de prendre en compte en supplément la problématique des multi-trajets, le procédé peut mettre en oeuvre deux algorithmes différents :

- La méthode MUSIC en l'absence de multi-trajets cohérents
- La méthode de MUSIC cohérent (Plus généralement il s'agit de l'algorithme d'auto-calibration) en présence de trajets cohérents, appliqué lorsque la méthode MUSIC ne conduit pas à des résultats satisfaisants.

On considérera qu'il faut appliquer la méthode MUSIC Cohérent lorsque par exemple la corrélation $\hat{r}_{mp}$ estimée entre les trajets est plus grande que $r_{max}$ pouvant être fixé typiquement à 0.9. On décidera aussi d'appliquer MUSIC cohérent lorsque la méthode MUSIC a échoué.

En sortie de la goniométrie les sources (émetteurs et obstacles) sont identifiées soit comme trajet direct soit comme trajet secondaire par un critère temporel : Le trajet en avance sur les autres est le trajet direct.

Les algorithmes MUSIC [1] et MUSIC Cohérent [4] sont basés sur les propriétés de la matrice de covariance $R_x = E[x(t)x(t)^H]$ du vecteur observation $x(t)$ de l'équation (1) où $E[.]$ est l'espérance mathématique et $^H$ l'opérateur de conjugaison et transposition. D'après (1), la matrice de covariance s'écrit

$$R_x = A\,R_s\,A^H + \sigma^2\,I_N \quad \text{where } R_s = E[s(t)\,s(t)^H] \quad \text{and} \quad E[n(t)\,n(t)^H] = \sigma^2\,I_N \qquad (11)$$

Et où

$$s(t) = \begin{bmatrix} s_1(t-\tau_1) \\ \vdots \\ s_M(t-\tau_M) \\ b_1(t) \\ \vdots \\ b_P(t) \end{bmatrix} \quad \text{et} \quad A = \begin{bmatrix} a(\theta_{1d}) & \cdots & a(\theta_{Md}) & a(\theta_{1r}) & \cdots & a(\theta_{Pr}) \end{bmatrix} \qquad .(12)$$

Les deux méthodes sont basées sur la décomposition en éléments propres de $R_x$ où les vecteurs $e_k$ sont les vecteurs propres associés à la valeur propre $\lambda_k$ où ($\lambda_1 \ge \lambda_2 \ge ... \ge \lambda_N$). $K$ est défini comme étant le rang de la matrice $R_x$ tel que $\lambda_1 \ge ... \ge \lambda_K \ge \sigma^2 = \lambda_{K+1} ... = \lambda_N$. Les deux méthodes se différentieront par :

  o La structure des vecteurs propres $e_k$ de l'espace signal ($1 \le k \le K$)
  o La valeur $K$ du rang de la matrice $R_x$.

Les deux méthodes ont en commun d'exploiter l'orthogonalité entre les vecteurs propres de l'espace signal ($1 \le k \le K$) et les vecteurs propres de l'espace bruit ($K+1 \le k \le N$). Les critères associés aux deux méthodes nécessiteront le calcul du projecteur bruit où

$$\Pi_b = \sum_{i=K+1}^{N} e_i\,e_i^H \qquad .(13)$$

En pratique l'estimée $\hat{\Pi}_b$ du projecteur bruit est déduit de l'estimée $\hat{R}_x(T_0)$ suivante de la matrice de covariance $R_x$

$$\hat{R}_x(T_0) = \frac{1}{T_0} \sum_{t=1}^{T_0} x(t)x(t)^H \qquad .(14)$$

Cas de trajet non cohérent et application de MUSIC

Dans ce cas le rang de la matrice $R_x$ vaut $K=M+P$ car la matrice de covariance des sources $R_s$ est de rang plein. Dans ces conditions, les $K$ vecteurs propres de l'espace signal s'écrivent :

$$\mathbf{e}_k = \sum_{k=1}^{K} \alpha_k \mathbf{a}(\theta_k) \quad \text{pour } (1 \le k \le K) \qquad .(15)$$

Dans ce cas particulier la matrice A est de dimension $N \times K$ car A=[a($\theta_1$) $\cdots$ a($\theta_K$)]. Sachant que la décomposition en éléments propres de $R_x$ induit l'orthogonalité entre les $\mathbf{e}_k$ de l'espace signal de l'équation (15) et les $e_i$ de l'espace bruit de l'équation (13), les vecteurs $\mathbf{a}(\theta_k)$ sont orthogonaux aux colonnes du projecteur bruit $\Pi_b$. Dans ces conditions, les incidences $\theta_k$ des $K$ sources sont les $K$ minima qui annulent le critère de MUSIC suivant :

$$J_{MUSIC}(\theta) = \frac{\mathbf{a}(\theta)^H \mathbf{\Pi}_b \mathbf{a}(\theta)}{\mathbf{a}(\theta)^H \mathbf{a}(\theta)} \qquad .(16)$$

Le critère de MUSIC $J_{MUSIC}(\theta)$ est calculé pour 0 allant de 0 à 360° et est normalisé entre 0 et 1 car il vérifie pour tous les 0 que : $0 \le J_{MUSIC}(\theta) \le 1$.

Dans le procédé deux techniques peuvent être mises en oeuvre pour détecter la présence de sources cohérentes :

    o Une détection de sources cohérentes par seuillage du critère $J_{MUSIC}(\theta)$.
    o Une détection de sources cohérentes après estimation du niveau de corrélation entre les sources.

Détection de sources cohérentes Par seuillage de $J_{MUSIC}(\theta)$

Afin de mieux comprendre le choix d'un seuil le comportement du critère de MUSIC $J_{MUSIC}(\theta)$ est simulé en présence de deux trajets d'incidences $\theta_{11}$=100° et $\theta_{12}$=200° dans les cas cohérents puis non cohérents. Le résultat de la simulation est donné sur la figure 8. Le réseau de $N$=5 capteurs est circulaire avec un rayon de 0.5$\lambda$. Dans ce contexte le bon fonctionnement de MUSIC est caractérisé par le fait que $J_{MUSIC}(\theta_{11}=100°)$ et $J_{MUSIC}(\theta_{12}=200°)$ soient nuls.

Selon la figure 8 cette bonne propriété est vérifiée lorsque les deux multi-trajets sont non cohérents. Dans le cas cohérent, $J_{MUSIC}(\theta_{11}=100°)$ et $J_{MUSIC}(\theta_{12}=200°)$ sont d'une part loin d'être nuls et d'autre part les $K$=2 plus petits minima associés aux estimées $\hat{\theta}_{11}$ et $\hat{\theta}_{12}$ de $J_{MUSIC}(\theta)$ sont beaucoup plus éloignés de $\theta_{11}$=100° et $\theta_{12}$=200° que dans le cas cohérent. D'autre part dans le cas cohérent la dynamique entre les $K$=2 plus petits minima du critère et les suivants est très faible, d'où un risque important d'estimer des directions d'arrivées ambiguës.

L'exemple de la figure 8 montre qu'il est facile d'éliminer les mauvaises goniométries $\hat{\theta}_{11}$ et $\hat{\theta}_{12}$ liées à la présence de sources cohérentes par un seuil de bonne goniométrie "*seuil_1ier*". Lorsqu'un minimum $J_{MUSIC}(\hat{\theta}_m)$ vérifie $J_{MUSIC}(\hat{\theta}_m) < seuil\_1ier$, l'azimut $\hat{\theta}_m$ est la direction d'un trajet non cohérent et lorsque $J_{MUSIC}(\hat{\theta}_m) > seuil\_1ier$, l'azimut $\hat{\theta}_m$ n'est pas associé à une direction d'arrivée. La présence de trajets cohérents est alors détectée lorsque le nombre $K$ de minima vérifiant $J_{MUSIC}(\hat{\theta}_k) < seuil\_1ier$ est inférieur au rang $K$ de la matrice de covariance $\mathbf{R_x}$.

Détection de sources cohérentes par estimation du niveau d'inter-corrélation

Dans ce cas où $K=M+P$, les $K$ incidences estimées vérifient $J_{MUSIC}(\hat{\theta}_k) < seuil\_1ier$. Toutefois, il est par ailleurs connu que plus le niveau de corrélation entre les sources est important plus la variance des estimées $\hat{\theta}_m$ est grande. L'objectif est alors d'estimer la matrice de covariance des sources $R_s$ de l'équation (11) à partir des estimées de la matrice A ainsi que le niveau de bruit $\sigma^2$. A partir de la matrice de covariance $\hat{\mathbf{R}}_x(T_0)$ et des estimées $\hat{\theta}_1...\hat{\theta}_K$, les étapes du procédé sont les suivantes :

    **Etape A.1** : A partir du résultat d'EVD de $\hat{\mathbf{R}}_x(T_0) = \sum_{i=1}^{N} \lambda_i \mathbf{e}_i \mathbf{e}_i^H$, qui est utilisé pour construire $\Pi_b$, calcul d'une estimée du niveau de bruit

$$\hat{\sigma}^2 = \left( \sum_{i=K+1}^{N} \lambda_i \right) / (N - K) \qquad .(17)$$

    Etape A.2 : Calcul d'une estimée de la matrice de covariance debruité Ry =A $R_s$ $A^H$ en effectuant

$$\hat{\mathbf{R}}_y = \sum_{i=1}^{K}\left(\lambda_i - \hat{\sigma}^2\right)\mathbf{e}_i\mathbf{e}_i^H \qquad\qquad .(18)$$

**Etape A.3** : A partir de l'estimée Â=[a($\hat{\theta}_1$) ... a($\hat{\theta}_k$)] de la matrice des vecteurs directeurs, déduction d'une estimée de la matrice de covariance des sources

$$\hat{\mathbf{R}}_s = \mathbf{A}^{\#}\hat{\mathbf{R}}_y\left(\mathbf{A}^{\#}\right)^H \quad \text{où} \quad \mathbf{A}^{\#} = \left(\mathbf{A}^H\mathbf{A}\right)^{-1}\mathbf{A}^H \qquad\qquad .(19)$$

**Etape A.4** : Calcul de la corrélation maximum $\hat{r}_{max}$ entre les trajets soit

$$\hat{r}_{\max} = \max_{i,j}\left(\frac{\left|\hat{\mathbf{R}}_s\left(i,j\right)\right|}{\sqrt{\hat{\mathbf{R}}_s\left(i,i\right)\hat{\mathbf{R}}_s\left(j,j\right)}}\right) \qquad\qquad .(20)$$

La corrélation $\hat{r}_{mp}$ estimée entre les trajets est plus grande que $r_{max}$ pouvant être fixé typiquement à 0.9.

La technique MUSIC cohérent sera utilisée lorsque $\hat{r}_{max} > r_{max}$. Une valeur typique de $r_{max}$ est 0.9.

Cas de trajet cohérent et Application de MUSIC Cohérent

Dans ce cas le rang de la matrice $R_x$ vérifie $K<M+P$ car la matrice de covariance des sources $R_s$ n'est plus de rang plein. Dans ces conditions, les $K$ vecteurs propres de l'espace signal s'écrivent :

$$\mathbf{e}_k = \sum_{k=1}^{K}\alpha_k\mathbf{b}(\boldsymbol{\theta}_k,\boldsymbol{\rho}_k,I_k) \quad \text{pour} \ \ (1\le k \le K< M+P) \qquad\qquad .(21)$$

Où

$$\mathbf{b}(\boldsymbol{\theta}_k,\boldsymbol{\rho}_k,I_k) = \sum_{p=1}^{I_k}\rho_p \ \ \mathbf{a}(\theta_{kp}) = \mathbf{U}_{I_k}(\boldsymbol{\theta}_k)\,\boldsymbol{\rho}_k \qquad\qquad .(22)$$

avec $U_{I_k}(\theta_k)= [a(\theta_{kl}) ... a(\theta_{klk})]$ and $\rho_k = [\rho_{kl} ... \rho_{klk}]^T$

Où les $\theta_{kp}(1\le p \le I_k)$ sont les incidences des trajets cohérents associés au même émetteur, avec ce modèle

$\sum_{k=1}^{K}I_k = M + P$. Sachant que la décomposition en éléments propres de $R_x$ induit l'orthogonalité entre les $e_k$ de l'espace signal de l'équation (13) et les $e_i$ de l'espace bruit de l'équation (15), les vecteurs $b(\theta_k,\rho_k,I_k)$ sont orthogonaux aux colonnes du projecteur bruit $\Pi_b$. D'après (21)(22) et l'algorithme de MUSIC cohérent de [4], les incidences $\theta_k=[\theta_{kl} ... \theta_{kl}]$ des $K$ groupes de sources cohérentes sont les $K$ minima qui annulent le critère suivant de MUSIC cohérent

$$J_{MC}\left(\boldsymbol{\theta},I\right) = \frac{\det\left(\mathbf{U}_I(\boldsymbol{\theta},P)^H\,\boldsymbol{\Pi}_b\mathbf{U}_I(\boldsymbol{\theta},P)\right)}{\det\left(\mathbf{U}_I(\boldsymbol{\theta},P)^H\,\mathbf{U}_I(\boldsymbol{\theta},P)\right)} \qquad\qquad .(23)$$

Le critère de MUSIC $J_{MC}(\theta,I)$ est calculé pour tous les $I$-uplets $\theta=[\theta_1\cdots\theta_I]$ vérifiant $\theta_1 >\cdots>\theta_I$ où les $\theta_i$ varie entre 0 et 360˚. Le critère $J_{MC}(\theta,I)$ est de plus normalisé entre 0 et 1 car il vérifie $0\le J_{MC}(\theta)\le 1$. Comme pour MUSIC l'élimination des mauvais $I$-uplets se fera par l'intermédiaire d'un seuil de bonne goniométrie "*seuil_1ier*". En conséquence le $I$-uplets $\theta_k = [\theta_{kt}\cdots\theta_{kt}]$ doit vérifier $J_{MC}(\theta_k) < seuil\_1^{ier}$ pour être valide. Si le nombre de bon $I$-uplets est inférieur à $K$, la méthode MUSIC cohérente est réitérée pour $l=l+1$.

Les étapes de MUSIC cohérent sont alors les suivantes :

**Etape B.1 :** Initialisation à $l=2$

**Etape B.2 :** Calcul du critère de l'équation (23) pour tous les $\theta = [\theta_1 \cdots \theta_l]$ vérifiant $\theta_1 > \cdots > \theta_l$ sachant que les $\theta_i$ varie entre 0 et 360˚.

**Etape B.3 :** Recherche des $\hat{K}$ $l$-uplets vérifiant $J_{MC}(\hat{\theta}_k) < seuil\_1^{ier}$.

**Etape B.4 :** Si $\hat{K} < K$ alors retour à l'étape B.2 avec $l=l+1$.

**Etape B.5 :** Calcul de l'ensemble $\{\hat{\theta}_1 \cdots \theta_{M+P}\}$ des incidences des sources en calculant $\left\{\hat{\theta}_1 \cdots \hat{\theta}_{M+P}\right\} = \bigcap_{i=1}^{\hat{K}} \theta_k$

**Séparation des trajets directs des trajets réfléchis**

La séparation des trajets est effectuée à partir du signal $\mathbf{x}(t)$ de l'équation (1) ainsi que des estimées des incidences des sources $\{\hat{\theta}_1 \cdots \hat{\theta}_{M+P}\}$. D'après les équations (1) et (12) le signal reçu peut s'écrire :

$$\mathbf{x}(t) = \mathbf{As}(t) + \mathbf{n}(t) \qquad .(24)$$

En conséquence, le vecteur $s(t)$ est estimé à partir d'une estimée $\hat{\mathbf{A}} = [\mathbf{a}(\hat{\theta}_i) \cdots \mathbf{a}(\hat{\theta}_{M+P})]$ de la matrice $\mathbf{A}$ ainsi que du vecteur observation $\mathbf{x}(t)$ par une technique de filtrage spatial. En appliquant une technique de moindre carré

$$\hat{\mathbf{s}}(t) = \left(\hat{\mathbf{A}}^H \hat{\mathbf{A}}\right)^{-1} \hat{\mathbf{A}}^H \mathbf{x}(t) \qquad .(25)$$

La $i$-ième composante $\hat{s}_i(t)$ de $\hat{\mathbf{s}}(t)$ peut avoir les deux expressions suivantes d'après (12)

$$\bullet \quad \hat{s}_i(t) = s_m(t - \tau_m)$$

$$\bullet \quad \hat{s}_i(t) = b_p(t) = \sum_{m=1}^{M} \rho_{mp} \, s_m(t - \tau_{mp}) \qquad .(26)$$

En considérant le critère d'inter-corrélation suivant :

$$r_{ij}(\tau) = \frac{\left|E\left[\hat{s}_i(t)\hat{s}_j(t-\tau)\right]\right|^2}{E\left[\left|\hat{s}_i(t)\right|^2\right] E\left[\left|\hat{s}_j(t-\tau)\right|^2\right]} \qquad .(27)$$

Pour $i < j$, les deux situations suivantes sont rencontrées, sachant que les signaux des $M$ émetteurs sont indépendants

$$\bullet \quad \text{Cas n°1 : Si } \hat{s}_i(t) = s_m(t - \tau_m) \text{ et } \hat{s}_j(t) = s_{m'}(t - \tau_{m'}) \qquad .(28)$$

$$\text{alors } r_{ij}(\tau) = 0$$

- Cas n°2 : Si $\hat{s}_i(t) = s_m(t-\tau_m)$ et $\hat{s}_j(t) = b_p(t) = \sum_{m'=1}^{M} \rho_{m'p}\, s_{m'}(t - \tau_{m'p})$ alors

$$\max_{\tau} r_{ij}(\tau) = r_{ij}(\tau_{mp} - \tau_m) = \frac{|\rho_{mp}|^2\, E\left[|s_m(t)|^2\right]}{\sum_{m'=1}^{M} |\rho_{m'p}|^2\, E\left[|s_{m'}(t)|^2\right]}$$

- Cas n°3 : Si $\hat{s}_i(t) = b_{p'}(t)$ et $\hat{s}_j(t) = b_p(t) = \sum_{m'=1}^{M} \rho_{m'p}\, s_{m'}(t - \tau_{m'p})$ alors

$$\max_{\tau} r_{ij}(\tau) = r_{ij}(\tau_{mp} - \tau_{mp'}) = \frac{\left|\rho_{mp}\rho_{mp'}\right|^2\, E\left[|s_m(t)|^2\right]^2}{\left(\sum_{m'=1}^{M} |\rho_{mp'}|^2\, E\left[|s_m(t)|^2\right]\right)\left(\sum_{m'=1}^{M} |\rho_{mp}|^2\, E\left[|s_m(t)|^2\right]\right)}$$

En conséquence, les sorties de filtrage $\hat{s}_i(t)$ associées aux signaux $b_p(t)$ sont corrélées avec toutes les autres sorties de filtrage $\hat{s}_j(t)$ pour $1 \leq j \leq M+P$. Les signaux $\hat{s}_i(t)$ associés aux réflecteurs (ou obstacles) seront ceux qui vérifient

$$\max_{\tau} r_{ij}(\tau) \neq 0 \quad \text{pour } i<j \text{ et les autres sorties seront associées au trajet direct.}$$

Dans la pratique max $r_{ij}(\tau)$ est comparé à un seuil $\eta$ pour décider d'une corrélation entre $\hat{s}_i(t)$ et $\hat{s}_j(t)$ (Une valeur typique de $\eta$ est 0.1). Le procédé de séparation des trajets direct et réfléchi consistant à identifier les ensembles $\Theta_d = \{\theta_{1d}...\theta_{Md}\}$ et $\Theta_r = \{\theta_{1r}...\theta_{Pt}\}$ est alors le suivant :

**Etape C.0 :** $\Theta_d = \varnothing$ et $\Theta_r = \varnothing$
**Etape C.1 :** Construction de la matrice $\hat{\mathbf{A}}=[\mathbf{a}(\hat{\theta}_1) \cdots \mathbf{a}(\hat{\theta}_{M+P})]$ des sources constituées par les émetteurs et les obstacles à partir de l'ensemble des incidences $\{\hat{\theta}_1 \cdots \hat{\theta}_{M+P}\}$ estimées soit par MUSIC soit par MUSIC Cohérent.
**Etape C.2 :** Estimation du vecteur signal $\hat{\mathbf{s}}(t)$ de dimension $(M+P)$x1 à partir de $\hat{\mathbf{A}}$ et des signaux capteurs $\mathbf{x}(t)$ par une technique de filtrage spatial. Un exemple de filtrage spatial est donné équation (25).
**Etape C. 3 :** Initialisation à $i$=1.

**Etape C. 4 :** Calcul de $r_{ij}^{\max} = \max_{\tau} r_{ij}(\tau)$ pour $1 \leq j \leq M + P$.

**Etape C. 5:** Si pour $1 \leq j \leq M + P$, $r_{ij}^{max} > \eta$ alors $\Theta_r = \{\theta_i\} \cup \Theta_r$.
**Etape C. 6 :** Si pour $1 \leq j \leq M + P$, il existe au moins une valeur de $j$ tel que $r_{ij}^{max} < \eta$ alors $\Theta_d = \{\theta_i\} \cup \Theta_d$.
**Etape C. 7** : si $i$<M+P retour à l'étape n°C.4 avec $i = i+1$

## Procédé de goniométrie en présence possible de multi-trajets cohérents

Le procédé de goniométrie élémentaire en présence possible de multi-trajets est représenté sur le schéma de la figure 9. Plus précisément les étapes sont les suivantes :

**Etape D.1** : Acquisition du signal $\mathbf{x}(t)$ et correction des distorsions des récepteurs par un processus de tarage connu de l'homme du métier.
**Etape D.2** : Calcul de la matrice de covariance $\hat{\mathbf{R}}_{\mathbf{x}}(T_0)$ de l'équation (14);
**Etape D.3** : A la suite d'une décomposition en valeurs propres ou « EVD » (Eigen Value Decomposition) de $\hat{\mathbf{R}}_x(T_0)$, détermination du rang $K$ de cette matrice et construction du projecteur bruit $\hat{\Pi}_b$ selon l'équation (13).
**Etape D.4** : Application de MUSIC : Recherche en fonction de $\theta$ des $K'$ minima $\theta$ du critère $J_{MUSIC}(\theta)$ de l'équation (16) vérifiant $J_{MUSIC}(\hat{\theta}_k) < seuil\_1^{ier}$ pour $1 \leq k \leq K'$. Si $K'< K$ allez à l'étape n°D.6.
**Etape D.5** : Calcul du taux de corrélation maximum $\hat{r}_{\max}$ entre les sources suivant les Etapes n°A.1 à A.4. Si $\hat{r}_{\max}$

$<r_{max}$ allez à l'étape n°D.7 et constitution de l'ensemble des incidences $\{\hat{\theta}_1 \cdots \hat{\theta}_{M+P}\}$.

**Etape D.6** : Application de la méthode MUSIC-cohérent selon les étapes n°B.1 à B.5 pour obtenir l'ensemble des incidences $\{\hat{\theta}_1 \cdots \hat{\theta}_{M+P}\}$

**Etape D.7** : Constitution des ensembles d'incidences $\Theta_d = \{\theta_{ld}...\theta_{Md}\}$ et $\Theta_r = \{\theta_{lr}..\theta_{Pr}\}$ associées respectivement aux trajets directs et aux multi-trajets à partir de l'ensemble des incidences $\{\hat{\theta}_1 \cdots \hat{\theta}_{M+P}\}$ selon les étapes C.

**Estimation TDOA (Time Différence of Arrival) figure 10**

L'objectif de ce paragraphe est d'estimer les TDOA $\tau_m$-$\tau_m$' de chacun des trajets directs ainsi que les TDOA $\tau_{mp}$-$\tau_{mp}$' des réflecteurs qui selon (2)(4) vérifient

$$\tau_{mp} - \tau_{mp}' = \frac{\|\mathbf{R}_p\mathbf{A}\| - \|\mathbf{R}_p\mathbf{B}\|}{c} \quad \text{et} \quad \tau_m - \tau_m' = \frac{\|\mathbf{E}_m\mathbf{A}\| - \|\mathbf{E}_m\mathbf{B}\|}{c} \qquad .(29)$$

Les étapes C.1 et C.2 décrites précédemment permettent à partir de l'ensemble des incidences $\{\hat{\theta}_1 \cdots \hat{\theta}_{M+P}\}$ de déduire le vecteur signal $\hat{s}(t)$ de l'équation (12).

Sachant d'une part que la i-ième composante $\hat{s}_i(t)$ de $\hat{s}(t)$ est le signal associé à la source d'incidence $\hat{\theta}_i$ et que d'autre part selon les étapes C décrites précédemment il est possible d'identifier si $\hat{\theta}_i \in \{\theta_{ld}...\theta_{Md}\}$ des incidences des trajets directs ou si $\hat{\theta}_i \in \{\theta_{lr}...\theta_{Pr}\}$ des trajets réfléchis. Ainsi :

- Si  $\hat{\theta}_i \in \{\theta_{ld}...\theta_{Md}\}$ alors $\hat{s}_i(t) = s_m(t - \tau_m)$

- Si  $\hat{\theta}_i \in \{\theta_{lr}...\theta_{Pr}\}$ alors $\hat{s}_i(t) = b_p(t) = \sum_{m=1}^{M} \rho_{mp} \, s_m(t - \tau_{mp})$

$$\qquad .(30)$$

Les signaux $\mathbf{x}_B(t)$ reçu sur le système de réception en B (voir figure 6) ont l'expression des équations(9)(10). Dans le procédé, la distorsion entre les signaux $s_m(t)$ et $s_m'(t)$ reçus respectivement en A et B est modélisé par le filtre FIR suivant:

$$s_m'(t) = \sum_{i=-L}^{L} h_i s_m(t - iT_e) = \underbrace{\begin{bmatrix} h_{-L} & & h_{-L} \end{bmatrix}}_{\mathbf{h}^T} \underbrace{\begin{bmatrix} s_m(t + LT_e) \\ \vdots \\ s_m(t - LT_e) \end{bmatrix}}_{\mathbf{s}_m(t)} \qquad .(31)$$

En conséquence le signal $\mathbf{x}_B(t)$ devient

$$\mathbf{x}_B(t) = \sum_{m=1}^{M} \mathbf{a}(\theta_{md}') \mathbf{h}^T \, \mathbf{s}_m(t - \tau_m') + \sum_{p=1}^{P} \mathbf{a}(\theta_{pr}') \mathbf{h}^T \, \mathbf{b}_p'(t) + \mathbf{n}_B(t) \qquad .(32)$$

Sachant que $b_p'(t) = \mathbf{h}^T \mathbf{b}_p'(t)$. D'après les équations (10)(32)

$$\mathbf{b}_p'(t) = \sum_{m=1}^{M} \rho_{mp}' \, \mathbf{s}_m(t - \tau_{mp}') \qquad .(33)$$

Et donc

$$\mathbf{x}_B(t) = \sum_{m=1}^{M} \mathbf{a}(\theta_{md}')\mathbf{h}^T \ \mathbf{s}_m(t-\tau_m') + \sum_{p=1}^{P}\sum_{m=1}^{M} \rho_{mp}' \mathbf{a}(\theta_{pr}')\mathbf{h}^T \mathbf{s}_m(t-\tau_{mp}') + \mathbf{n}_B(t) \qquad .(34)$$

- En conséquence lorsque $\hat{s}_i(t) = s_m(t-\tau_m)$, la différence du temps d'arrivée ou TDOA $\tau = \tau_m-\tau_m'$ correspondra à un maximum de corrélation entre les signaux $s_m(t-\tau_m)$ et $\mathbf{x}_B(t+\tau)$. Le critère de corrélation multi-voies construit est basé sur la théorie de Gardner[26][27]

$$\hat{c}_{xy}(\tau) = 1 - \det\left( \mathbf{I}_N - \hat{\mathbf{R}}_{xx}^{-1}\hat{\mathbf{R}}_{xy}(\tau)\hat{\mathbf{R}}_{yy}(\tau)^{-1}\hat{\mathbf{R}}_{yx}(\tau,f) \right)$$

$$\hat{\mathbf{R}}_{xy}(\tau) = \frac{1}{K}\sum_{k=1}^{K}\mathbf{x}(kT_e)\mathbf{y}(kT_e+\tau)^H$$

$$\hat{\mathbf{R}}_{xx} = \frac{1}{K}\sum_{k=1}^{K}\mathbf{x}(kT_e)\mathbf{x}(kT_e)^H \qquad .(35)$$

$$\hat{\mathbf{R}}_{yy}(\tau) = \frac{1}{K}\sum_{k=1}^{K}\mathbf{y}(kT_e+\tau)\mathbf{y}(kT_e+\tau)^H$$

Avec $\mathbf{x}(t)=s_m(t-\tau_m)$ et $\mathbf{y}(t)=\mathbf{x}_B(t)$. Le TDOA de la m-ième source est alors

$$\tau_m - \tau_m' = \max_{\tau} \hat{c}_{xy}(\tau) \qquad .(36)$$

D'après (34) et en présence de P obstacles, la fonction $\hat{c}_{xy}(\tau)$ contient $P$ autre maximums en $\tau_m-\tau_{mp}'$ pour $1 \le p \le P$. Sachant que $\tau_{mp}'>\tau_m'$, le procédé retiendra le TDOA $\tau_m-\tau_m'$ sachant qu'il vérifie $\tau_m-\tau_m' < \tau_m-\tau_{mp}'$.

- Lorsque $\hat{s}_i(t) = b_p(t) = \sum_{m=1}^{M} \rho_{mp} \ s_m(t-\tau_{mp})$ le vecteur observation est construit

$$\mathbf{b}_p(t) = \begin{bmatrix} b_p(t+LT_e) \\ \vdots \\ b_p(t-LT_e) \end{bmatrix} = \sum_{m=1}^{M} \rho_{mp} \ s_m(t-\tau_{mp}) \qquad .(37)$$

Le *TDOA* $\tau_{mp} - \tau_{mp}'$ correspondra à un maximum de corrélation entre les signaux $b_P(t)$ et $\mathbf{x}_B(t+\tau)$. Le critère de corrélation multi-voies de l'équation (35) est construit avec $\mathbf{x}(t)=\mathbf{b}_P(t)$ et $\mathbf{y}(t) = \mathbf{x}_B(t)$. Le critère de corrélation $\hat{c}_{xy}(\tau)$ contient aussi $P$ autre maximum de corrélation en $\tau_{mp}-\tau_m'$. Sachant que $\tau_{mp}'>\tau_m'$, le procédé retiendra le TDOA d'intérêt $\tau_{mp}-\tau_{mp}'$ sachant qu'il vérifie $\tau_{mp}-\tau_{mp}'<\tau_{mp}-\tau_m'$.
D'après la description ci-dessus le procédé d'association des angles d'arrivées et des différences de temps d'arrivée TDOA est le suivant :

Etape E.1 : Estimation du signal $\hat{\mathbf{s}}(t)$ à partir des incidences $\{\hat{\theta}_i \cdots \hat{\theta}_{M+P}\}$ et du signal $\mathbf{x}(t)$ de l'équation (1) selon le procédé des étapes C.1 et C.2 décrites précédemment.
Etape E.2 : $i=1$ $\Psi_d = \varnothing$ et $\Psi_r=\varnothing$
Etape E.3 : A partir de la i-*ième* composante $\hat{s}_i(t)$ de $\hat{\mathbf{s}}(t)$ construction des vecteurs $\mathbf{x}(t)=[\hat{s}_i(t+LT_e) \cdots \hat{s}_i(t-LT_e)]^T$ et $\mathbf{y}(t) = \mathbf{x}_B(t)$ puis construction du critère $\hat{c}_{xy}(\tau)$ de l'équation (35).
Etape E.4 : Recherche des $P'$ maximum $\Delta\tau_k$ du critère $\hat{c}_{xy}(\tau)$ tels que $\hat{c}_{xy}(\Delta\tau_k)>\eta$.
Etape E.5 : Si $\hat{\theta}_i \in \{\theta_{Id} \ldots \theta_{Md}\}$ ceci correspond à la présence d'un trajet direct et $\Delta\tau_{md} = \min\{\Delta\tau_k$ pour $1 \le k \le P'\}$ : $\Psi_d = \Psi_d \cup \{(\theta_i,\Delta\tau_{md})\}$.

**Etape E.6** : Si $\hat{\theta}_i \in \{\theta_{lr}..\theta_{Pt}\}$ correspond à la présence d'un multi-trajets et $\Delta\tau_{mr} = \min \{\Delta\tau_k \text{ pour } 1 \le k \le P'\}$ : $\Psi_r = \Psi_r \cup \{(\hat{\theta}_i, \Delta\tau_{md})\}$.

**Etape E.7** : $i = i + 1$ et si $i \le$ alors retour à l'étape E.3.

**Module de Localisation**

Localisation d'une source (émetteur-obstacle) à partir d'un couple de paramètres AOA-TDOA

Les couples de paramètres AOA-TDOA $(\hat{\theta}_{md}, \Delta\tau_{md})$ et $(\hat{\theta}_{pr}, \Delta\tau_{pr})$ permettent de localiser respectivement les émetteurs $E_m$ et les réflecteurs (ou obstacles) en $R_p$. Selon la figure 11, le procédé doit déterminer la position de l'émetteur sachant que sa direction d'arrivée est $\theta$ et que le TDOA entre les deux stations asynchrones A et B est $\Delta\tau$. Il faut donc résoudre le système d'équation suivant

$$\Delta\tau = \frac{\|\mathbf{BM}\| - \|\mathbf{AM}\|}{c} \quad \text{and} \quad \theta = angle(\mathbf{AM}, \mathbf{AB}) \tag{38}$$

qui a pour solution $\mathbf{M} = \mathbf{E}_m$ selon la figure 4. Les coordonnées $(x_m, y_m)$ de $\mathbf{E}_m$, vérifient alors

$$x_m = x_A + \frac{(\Delta\tau\, c)^2 - \|\mathbf{AB}\|^2}{2((\Delta\tau\, c) - \|\mathbf{AB}\|\cos(\theta))}\cos(\theta)$$

$$y_m = y_A + \frac{(\Delta\tau\, c)^2 - \|\mathbf{AB}\|^2}{2((\Delta\tau\, c) - \|\mathbf{AB}\|\cos(\theta))}\sin(\theta) \tag{39}$$

où $c$ est la célérité de la lumière, $(x_A, y_A)$ les coordonnées de A et $\|\mathbf{AB}\|$ la distance entre A et B.

L'ellipse d'incertitude de la localisation de l'émetteur en $E_m$ est construite à partir d'une connaissance de l'écart type $\sigma_{\Delta\tau}$ et de la moyenne $\overline{\Delta\tau}$ du TDOA $\Delta\tau$ ainsi que de l'écart type et de la moyenne $\overline{\theta}$ de l'estimation de l'angle d'incidence « AOA » $\theta$. Les paramètres de cette ellipse sont illustrés figure 12. L'ellipse d'incertitude a alors pour équation

$$x(t) = x_m + \delta D_m^{\max}\cos(\varphi_m)\cos(t) - \delta D_m^{\min}\sin(\varphi_m)\sin(t)$$

$$y(t) = y_m + \delta D_m^{\max}\sin(\varphi_m)\cos(t) + \delta D_m^{\min}\cos(\varphi_m)\sin(t) \tag{40}$$

pour $0 \le t \le 360°$. Les paramètres de l'ellipse $\left(\delta D_m^{\min}, \delta D_m^{\max}, \varphi_m\right)$ sont estimés à partir de $K$ points $\mathbf{M}_k (x_k, y_k)$ ayant pour coordonnées $(x_k, y_k)$

$$x_k = x_A + \frac{(\tau_k c)^2 - \|AB\|^2}{2\left((\tau_k c) - \|AB\|\cos(\theta_k)\right)}\cos(\theta_k)$$

$$y_k = y_A + \frac{(\tau_k c)^2 - \|AB\|^2}{2\left((\tau_k c) - \|AB\|\cos(\theta_k)\right)}\sin(\theta_k) \qquad .(41)$$

$$\text{avec} \quad \theta_k = \bar{\theta} + \cos\left(2\pi\frac{k}{K}\right)\sigma_\theta \quad \text{et} \quad \tau_k = \Delta\bar{\tau} + \sin\left(2\pi\frac{k}{K}\right)\sigma_{\tau_m}$$

Et finalement,

$$\delta D_m^{\max} = \max_k \left\{ \sqrt{(x_k - x_m)^2 + (y_k - y_m)^2} \right\} = \sqrt{(x_{k_{\max}} - x_m)^2 + (y_{k_{\max}} - y_m)^2}$$

$$\delta D_m^{\min} = \min_k \left\{ \sqrt{(x_k - x_m)^2 + (y_k - y_m)^2} \right\} \qquad (42)$$

$$\varphi_m = \text{angle}\left( (x_{k_{\max}} - x_m) + j(y_{k_{\max}} - y_m) \right)$$

En résumé, les étapes du procédé de localisation d'un émetteur et/ou d'un obstacle selon l'invention sont les suivantes :

**Etape n° 1 :** A partir de la connaissance de la position **E0** de l'émetteur de référence et de celles des stations en **A** et **B**, calculer le couple AOA-TDOA ($\theta_{ref}, \Delta\tau_{ref}$), pour l'émetteur **E0,**

**Etape n°2 :** Initialisation des étapes: $k=1$, $\Omega_d = \emptyset$ et $\Omega_r = \emptyset$.

**Etape n° 3 :** A partir des signaux capteurs $\mathbf{x}(t)$ tels que $(k-1)T \leq t < kT$ appliquer une goniométrie élémentaire multitrajets cohérents selon les étapes du sous-procédé des étapes **D**, par exemple, donnant un ensemble d'incidences $\Theta_d = \{\theta_{id}...\theta_{md}\}$ associées aux trajets directs et un ensemble d'incidence $\Theta_r = \{\theta_{ir}...\theta_{pr}\}$ associées aux trajets réfléchis.

**Etape n° 4 :** A partir des ensembles $\Theta_d$ et $\Theta_r$, ainsi que des signaux capteurs $\mathbf{x}(t)$ tels que $(k-1)T \leq t < kT$, application des étapes du sous-procédé des étapes E décrites précédemment, donnant un ensemble de couples AOA-TDOA $\Psi_d = \cup\{(\theta_{id}, \Delta\tau_{id})\}$ associés aux trajets directs et un ensemble de couples AOA-TDOA associés aux trajets réfléchis.

**Etape n°5 :** $\Omega_d = \Omega_d \cup \Psi_d$ et $\Omega_r = \Omega_r \cup \Psi_r$

**Etape n°6 :** $k = k + 1$, si $k < K$ alors retour à l'étape n°3.

**Etape n° 7 :** A partir de l'ensemble de données $\Omega_d$, extraire le nombre $M$ total d'émetteurs ainsi que les valeurs moyennes et écart type des paramètres AOA-TDOA de chacun des trajets directs pour obtenir $\overline{\Omega}_d = \cup\{(\overline{\theta}_{md}$ et $\sigma_{\theta md}, \Delta\overline{\tau}_{md}$ et $\sigma_{\Delta\tau md})$ pour $1 \leq m \leq M\}$ où $\overline{\theta}_{md}$ et $\sigma_{\theta md}$ sont les valeurs moyennes et écart type de l'incidence du $m^{\text{ième}}$ émetteur et $\Delta\overline{\tau}_{md}$ et $\sigma_{\Delta\tau md}$ sont les valeurs moyennes et écart type du TDOA de ce même émetteur selon une technique connue de l'Homme du métier.

**Etape n°8 :** A partir de l'ensemble de données $\Omega_r$ extraire le nombre $P$ total de réflecteurs ainsi que des valeurs moyennes et écart type des paramètres AOA-TDOA de chacun des trajets directs pour obtenir $\overline{\Omega}_r = \cup\{(\overline{\theta}_{pr}$ et $(\sigma_{\theta pr}, \Delta\overline{\tau}_{pr}$ et $\sigma_{\Delta\tau pr})$ pour $1 \leq p \leq p\}$ où $\overline{\theta}_{pr}$, et $(\sigma_{\theta pr}$, sont les valeurs moyennes et écart type de l'incidence du $p^{\text{ième}}$ réflecteur et $\Delta\overline{\tau}_{rd}$ et $(\sigma_{\Delta rd}$ sont les valeurs moyennes et écart type du TDOA de ce même réflecteur, l'extraction peut se faire par une des techniques de « clustering » connue de l'Homme du métier. Par exemple, elle peut être réalisée en appliquant le procédé d'association divulgué dans le brevet FR 04 11448.

**Etape n° 9 :** A partir de la connaissance de l'incidence $\theta_{ref}$ de l'émetteur de référence, recherche dans l'ensemble $\overline{\Omega}_d$ l'incidence $\overline{\theta}_{m_{ref}d}$ qui est la plus proche de $\theta_{ref}$.

**Etape n˚ 10** : corriger l'erreur d'orientation de l'antenne (réseaux capteurs) en effectuant dans les ensembles $\overline{\Omega}_d$ et $\overline{\Omega}_r$: $\overline{\theta}_{md}=\overline{\theta}_{md}+(\theta_{ref}-\overline{\theta}_{m\,refd})$ et $\overline{\theta}_{pr} =\overline{\theta}_{pr} +(\theta_{ref}-\overline{\theta}_{m\,refd})$.

**Etape n˚ 11** : corriger en TDOA du à l'asynchronisme des récepteurs en **A** et **B** en effectuant dans les ensembles $\overline{\Omega}_d$ et $\overline{\Omega}_r$: $\Delta\overline{\tau}_{md}=\Delta\overline{\tau}_{md}+(\Delta\tau_{ref}-\Delta\overline{\tau}_{m\,refd})$ et $\Delta\overline{\tau}_{pr}=\Delta\overline{\tau}_{pr}+(\Delta\tau_{ref}-\Delta\overline{\tau}_{m\,refd})$, car à l'étape n˚9 on a identifié l'indice $m_{ref}d$ associé à l'émetteur de référence et que le TDOA exacte $\Delta\tau_{ref}$ de l'émetteur de référence a été calculé à l'étape n˚ 1

**Etape n˚ 12** : A partir de la connaissance des incidences moyennes $\overline{\theta}_{mr}$ et $\overline{\theta}_{pr}$ puis du niveau des erreurs de calibration, calculer pour chacune des sources selon [5] par exemple des écarts types ($\sigma_{\theta_{md}}{}^{cal}$ et $\sigma_{\theta_{pr}}{}^{cal}$ liés aux erreurs de calibration.

**Etape n˚ 13** : corriger les écarts types des TDOA en tenant compte des erreurs de calibration dans les ensembles $\overline{\Omega}_d$ et $\overline{\Omega}_r$ : $\sigma_{\theta_{md}} =\sigma_{\theta_{md}} +\sigma_{\theta_{md}}{}^{cal}$ et $\sigma_{\theta_{pr}}=\sigma_{\theta_{pr}}{}^{cal}$ .

**Etape n˚14** : A partir des couples $(\overline{\theta}_{md}, \Delta\overline{\tau}_{md})$ et $(\overline{\theta}_{pr}, \Delta\overline{\tau}_{pr})$, déterminer les positions des émetteurs $\mathbf{E_m}$,$(\overline{x}_{md},\overline{y}_{md})$ et des réflecteurs $\mathbf{R_p}(\overline{x}_{pr}\,,\overline{y}_{pr})$ en appliquant le calcul de l'équation (39).

**Etape n˚ 15** : A partir des couples $(\overline{\theta}_{md}$ et $\sigma_{\theta_{md}},\Delta\overline{\tau}_{md}$ et $\sigma_{\Delta r_{md}})$ et $(\overline{\theta}_{pr}$ et $\sigma_{\theta_{pr}},\Delta\overline{\tau}_{pr}$ et $\sigma_{\Delta\tau_{pr}})$, déterminer les positions des ellipses d'incertitude des émetteurs de position $\mathbf{E_m}$ et des réflecteurs de position $\mathbf{R_p}$ en appliquant, par exemple, le calcul des équations (41)(42).

L'invention permet d'effectuer une localisation de plusieurs émetteurs. Elle prend en compte la présence de multi-trajets en donnant la position des réflecteurs.

Elle ne fait aucune hypothèse sur les signaux émis : ils peuvent être de bandes différentes, avec ou sans signaux pilote. Les signaux peuvent être tout aussi bien des signaux de radio-communication que des signaux RADAR.

## Revendications

1. Procédé pour localiser un ou plusieurs émetteurs Ei en présence potentiel d'obstacles Rp dans un réseau comprenant au moins une première station de réception A et une seconde station de réception B asynchrone à A **caractérisé en ce qu'**il comporte au moins les étapes suivantes :

   • L'identification d'un émetteur de référence de position connue $E_o$ par un calcul du couple AOA-TDOA ($\theta_{ref}$, $\Delta\tau_{ref}$) à partir de la connaissance de la position E0 de l'émetteur de référence et de celles des stations A et B,
   • Une estimation de la direction d'arrivée du ou des émetteurs et des réflecteurs (ou estimation de l'AOA) sur la première station A,
   • La séparation des signaux reçus sur la première station A par filtrage spatial dans la direction de la source (émetteurs et/obstacles),
   • La séparation des incidences provenant des émetteurs de celles provenant des obstacles par inter-corrélation des signaux issus du filtrage spatial en A.
   • L'estimation de la différence de temps d'arrivée ou TDOA d'une source (émetteurs et/obstacles) par inter-corrélation du signal de la source (émetteurs et/obstacles) reçue en A avec les signaux reçus sur la deuxième station de réception B : pour chaque source émetteur Ei (ou obstacles Rj) un couple (AOA,TDOA) est alors obtenu,
   • Une synthèse des mesures des couples (AOAi, TDOAi) de chaque source (Ei, Rp) afin de dénombrer les sources et de déterminer les moyennes et écart type de leurs paramètres AOA et TDOA,
   • La détermination de l'erreur de synchronisme entre les stations de réception A et B en utilisant l'émetteur de référence $E_0$, puis la correction de cette erreur sur tous les TDOAi des couples (AOAi, TDOAi) issus de la synthèse,
   • La détermination de l'erreur d'orientation de la station de réception A en utilisant l'émetteur de référence $E_0$, puis la correction de cette erreur sur tous les AOAi des couples (AOAi, TDOAi) issus de la synthèse,
   • La localisation des différents émetteurs à partir de chaque couple (AOAi, TDOAi).

2. Procédé selon la revendication 1, **caractérisé en ce qu'**il comporte au moins une étape dans laquelle une ellipse d'incertitude des mesures d'écart type des paramètres (AOA, TDOA) est établie.

3. Procédé selon la revendication 1, **caractérisé en ce qu'**il comporte les étapes suivantes :

   **Etape n˚2 :** Initialisation des étapes: $k$=1, $\Omega_d$ =Ø et $\Omega_r$ = Ø
   **Etape n˚ 3 :** à partir des signaux capteurs $\mathbf{x}(t)$ tels que $(k\text{-}1)T \leq t < kT$ application d'une goniométrie élémentaire, donnant un ensemble d'incidences $\Theta_d=\{\theta_{ld}...\theta_{Md}\}$ associées aux trajets directs et un ensemble d'incidence $\Theta_r = \{\theta_{lr}...\theta_{Pr}\}$ associée aux trajets réfléchi,

**Etape n˚4 :** à partir des ensembles $\Theta_d$ et $\Theta_r$ ainsi que des signaux capteurs x(t) tels que $(k-1)T \leq t < kT$, appliquer une méthode d'association des angles d'arrivée et des TDOA afin d'obtenir un ensemble de couples AOA-TDOA $\Psi_d = \cup\{(\hat{\theta}_{ld}, \Delta\tau_{ld})\}$ associés aux trajets directs et un ensemble de couples AOA-TDOA $\Psi_r = \cup\{(\hat{\theta}_{ir}, \Delta\tau_{ir})\}$ associés aux trajets réfléchis

**Etape n˚5 :** $\Omega_d = \Omega_d \cup \Psi_d$ et $\Omega_r = \Omega_r \cup \Psi_r$

**Etape n˚6:** $k = k+1$, si $k < K$ alors retour à l'étape n˚3.

**Etape n˚7 :** à partir de l'ensemble de données $\Omega_d$, extraire le nombre $M$ total d'émetteurs ainsi que les valeurs moyennes et écart type des paramètres AOA-TDOA de chacun des trajets directs afin d'obtenir $\overline{\Omega}_d = \cup\{(\overline{\theta}_{md}$ et $\sigma_{\theta md}, \Delta\overline{\tau}_{md}$ et $\sigma_{\Delta r_{md}})$ pour $1 \leq m \leq M\}$ où $\overline{\theta}_{md}$ et $\sigma_{\theta md}$ sont les valeurs moyennes et écart type de l'incidence du $m^{ième}$ émetteur et $\Delta\overline{\tau}_{md}$ et $\sigma_{\Delta\tau_{md}}$ sont les valeurs moyennes et écart type du TDOA de ce même émetteur selon une technique connue de l'Homme du métier

**Etape n˚8 :** à partir de l'ensemble de données $\Omega_r$ extraire le nombre $P$ total de réflecteurs ainsi que des valeurs moyennes et écart type des paramètres AOA-TDOA de chacun des trajets directs pour obtenir $\overline{\Omega}_r = \cup\{(\overline{\theta}_{pr}$ et $(\sigma_{\theta_{pr}}, \Delta\overline{\tau}_{pr}$ et $\sigma_{\Delta r_{pr}})$ pour $1 \leq p \leq P\}$ où $\theta_{pr}$ et $\sigma_{\theta_{pr}}$ sont les valeurs moyennes et écart type de l'incidence du $p^{ième}$ réflecteur et $\Delta\overline{\tau}_{rd}$ et $\sigma_{\Delta r_{rd}}$ sont les valeurs moyennes et écart type du TDOA de ce même réflecteur

**Etape n˚9 :** à partir de la connaissance de l'incidence $\theta_{ref}$ de l'émetteur de référence, rechercher dans l'ensemble $\overline{\Omega}_d$ de l'incidence $\overline{\theta}_{m_{ref}d}$ qui est la plus proche de $\theta_{ref}$

**Etape n˚10 :** corriger l'erreur d'orientation de l'antenne en effectuant dans les ensembles $\overline{\Omega}_d$ et $\overline{\Omega}_r$ : $\overline{\theta}_{md} = \overline{\theta}_{md} + (\theta_{ref} - \overline{\theta}_{m_{ref}d})$ et $\overline{\theta}_{pr} = \overline{\theta}_{pr} + (\theta_{ref} - \overline{\theta}_{m_{ref}d})$

**Etape n˚11 :** corriger l'erreur en TDOA du à l'asynchronisme des récepteurs en A et B en effectuant dans les ensembles $\overline{\Omega}_d$ et $\overline{\Omega}_r$: $\Delta\overline{\tau}_{mref} = \Delta\overline{\tau}_{mref} + (\Delta\tau_{ref} - \Delta\overline{\tau}_{m_{ref}d}$ et $\Delta\overline{\tau}_{pr} = \Delta\overline{\tau}_{pr} + (\Delta\tau_{ref} - \Delta\overline{\tau}_{m_{ref}d})$

**Etape n˚12 :** à partir de la connaissance des incidences moyennes $\overline{\theta}_{mref}$ et $\overline{\theta}_{per}$ puis du niveau des erreurs de calibration, calculer pour chacune des sources des écarts types $\sigma_{\theta_{ref}}^{cal}$ et $\sigma_{\theta_{per}}^{cal}$ liés aux erreurs de calibration,

**Etape n˚13 :** corriger les valeurs d'écarts types des TDOA en effectuant dans les ensembles $\overline{\Omega}_d$, et $\overline{\Omega}_r$ : $\sigma_{\theta_{med}} = \sigma_{\theta_{ref}} + \sigma_{\theta_{med}}^{cal}$ et $\sigma_{\theta_{per}} = \sigma_{\theta_{per}} + \sigma_{\theta_{per}}^{cal}$

**Etape n˚14 :** A partir des couples $(\overline{\theta}_{md}, \Delta\overline{\tau}_{md})$ et $(\overline{\theta}_{pr}, \Delta\overline{\tau}_{pr})$, déterminer les positions des émetteurs $\mathbf{E_m}(\overline{x}_{md}, \overline{y}_{md})$ et des réflecteurs $\mathbf{R_p}(\overline{x}_{pr}, \overline{y}_{pr})$

**Etape n˚15 :** A partir des couples $(\overline{\theta}_{nd}$ et $\sigma_{\theta_{ref}}, \Delta\overline{\tau}_{ref}$ et $\sigma_{\Delta_{ref}})$ et $(\overline{\theta}_{pr}$ et $\sigma_{\theta_{pr}}, \Delta\overline{\tau}_{pr}$ et $\sigma_{\Delta r_{pr}})$, déterminer les positions des ellipses d'incertitude des émetteurs de position $\mathbf{E_m}$ et des réflecteurs de position $\mathbf{R_p}$.

4. Système pour localiser un ou plusieurs émetteurs Ei en présence potentiel d'obstacles Rp dans un réseau comprenant au moins une première station de réception A et une seconde station de réception de B asynchrone à A **caractérisé en ce qu'**il comporte au moins un émetteur de référence $E_0$ dont la position est connue et un processeur adapté à mettre en oeuvre les étapes du procédé selon l'une des revendications 1 à 3.

**Claims**

1. A method for locating one or more emitters Ei in the potential presence of obstacles Rp in an array comprising at least one first receiving station A and one second receiving station B asynchronous to A, **characterised in that** it comprises at least the following steps:

• identifying a reference emitter in a known position $E_0$ by a calculation of the AOA-TDOA ($\theta_{ref}$, $\Delta\tau_{ref}$) pair from knowledge of the position $E_0$ of the reference emitter and that of stations A and B,

• estimating the direction of arrival of one or more of the emitters and reflectors (or estimating AOA) on the first station A,

• separating the signals received on the first station A by spatial filtering towards the source (emitters and obstacles),

• separating the incidences originating from the emitters from those originating from the obstacles by inter-correlation of the signals originating from the spatial filtering in A,

• estimating the difference in the time of arrival or TDOA of a source (emitters and obstacles) by inter-correlation of the signal from the source (emitters and obstacles) received at A with the signals received on the second receiving station B: for each emitting source Ei (or obstacles Rj) a pair (AOA, TDOA) is thus obtained,

• synthesising the measured values of the pairs (AOAi, TDOAi) of each source (Ei, Rp) so as to number the sources and to determine the mean values and standard deviation of their AOA and TDOA parameters,

• determining the error in synchronism between the receiving stations A and B using the reference emitter $E_0$, then correcting this error on all of the TDOAi of the pairs (AOAi, TDOAi) originating from the synthesis,

• determining the orientation error of the receiving station A using the reference emitter $E_0$, then correcting said error on all of the AOAi of the pairs (AOAi, TDOAi) resulting from the synthesis,
• locating the different emitters from each pair (AOAi, TDOAi).

2. The method according to claim 1, **characterised in that** it comprises at least one step wherein an ellipse of uncertainty of the standard deviation measured values of the parameters (AOA, TDOA) is established.

3. The method according to claim 1, **characterised in that** it comprises the following steps:

Step 2: initialising the steps: k=1, $\Omega_d = \varnothing$ and $\Omega_r = 0$;

Step 3: applying, from sensor signals x(t), such as $(k - 1)T \leq 1 < kT$, an elementary goniometry, providing a set of incidences $\Theta_d = \{\theta_{1d}... \theta_{Md}\}$ associated with direct paths and a set of incidences $\Theta_d = \{\theta_{1r}... \theta_{Pr}\}$ associated with reflected paths;

Step 4: applying, from sets $\Theta_d$ and $\Theta_r$ as well as the sensor signals x(t), such as $(k - \underline{1)T} \leq 1 < kT$, a method for associating the angles of arrival and the TDOA so as to obtain a set of AOA-TDOA pairs $\Psi_d = \bigcup_i \left\{ \left( \hat{\theta}_{id}, \Delta \tau_{id} \right) \right\}$

associated with direct paths and a set of AOA-TDOA pairs $\Psi_r = \bigcup_i \left\{ \left( \hat{\theta}_{ir}, \Delta \tau_{ir} \right) \right\}$ associated with reflected paths;

Step 5: $\Omega_d = \Omega_d \cup \Psi_d$ and $\Omega_r = \Omega_r \cup \Psi_r$;

Step 6: $k = k + 1$, if $k < K$ then returning to step 3;

Step 7: extracting, from the set of data $\Omega_d$, the total number M of emitters as well as the mean values and standard deviation of the AOA-TDOA parameters of each of the direct paths so as to obtain

$$\overline{\Omega}_d = \bigcup_i \{ ( \overline{\theta}_{md}$$

and

$$\sigma_{\theta_{md}}, \Delta \overline{\tau}_{md}$$

and

$$\sigma_{\Delta r_{md}}$$

for $1 \leq m \leq M$) where $\overline{\theta}_{nd}$ and $\sigma_{\theta_{nd}}$ are the mean values and standard deviation of the incidence of the $m^{th}$ emitter and $\Delta \overline{\tau}_{nd}$ and $\sigma\text{-}\Delta r_{nd}$ are the mean values and standard deviation of the TDOA of said emitter according to a technique known to a person skilled in the art;

Step 8: extracting, from the set of data $\Omega_r$, the total number P of reflectors as well as the mean values and the standard deviation of the AOA-TDOA parameters of each of the direct paths so as to obtain and and $\sigma_{\Delta r_{pr}}$) for $1 \leq p \leq \}$ where $\overline{\theta}_{pr}$ and $\sigma_{\theta_{pr}}$ are the mean values and standard deviation of the $p^{th}$ reflector and $\Delta \overline{\tau}_{rd}$ and $\sigma Ar_{nd}$ are the mean values and standard deviation of the TDOA of said reflector;

Step 9: finding, from knowledge of the incidence $\theta_{ref}$ of the reference emitter, in the $\overline{\Omega}_d$ set the incidence $\overline{\theta}_{mrefd}$ which is closest to $\theta_{ref}$;

Step 10: correcting the orientation error of the antenna by performing the following in sets $\overline{\Omega}_d$ and $\overline{\Omega}_r$: $\overline{\theta}_{md} = \overline{\theta}_{md} + (\overline{\theta}_{ref} - \overline{\theta}_{mrefd})$ and $\overline{\theta}_{pr} = \overline{\theta}_{pr} + (\overline{\theta}_{ref} - \overline{\theta}_{mrefd})$;

Step 11: correcting the error in TDOA caused by the asynchronism of the receivers at A and B by performing the following in sets $\overline{\Omega}_d$ and $\overline{\Omega}_r$: $\Delta \overline{\tau}_{md} = \Delta \overline{\tau}_{ref} + (\Delta \overline{\tau}_{ref} - \Delta \overline{\tau}_{mrefd})$ and $\Delta \overline{\tau}_{pr} = \Delta \overline{\tau}_{pr} + (\Delta \overline{\tau}_{ref} - \Delta \overline{\tau}_{mrefd})$;

Step 12: calculating, from knowledge of the mean incidences $\overline{\theta}_{mr}$ and $\overline{\theta}_{pr}$ and then the level of calibration errors, for each of the sources the standard deviations $\sigma_{\theta_{md}}^{cal}$ and $\sigma_{\theta_{pr}}^{cal}$ associated with the calibration errors;

Step 13: correcting the values of the standard deviations of the TDOA by performing the following in sets $\overline{\Omega}_d$ and $\overline{\Omega}_r$: $\sigma_{\theta_{ref}} = \sigma_{\theta_{md}} + \sigma_{\theta_{md}}^{cal}$ and $\sigma_{\theta_r} = \sigma_{\theta_r} + \sigma_{\theta_{pr}}^{cal}$;

Step 14: determining, from pairs $(\overline{\theta}_{md}, \Delta \overline{\tau}_{mb})$ and $(\overline{\theta}_{pr}, \Delta \overline{\tau}_{pr})$, the positions or the emitters $Em(\overline{x}_{md}, \overline{y}_{md}, \overline{y}_{md})$ and reflectors $Rp(\overline{x}_{pr}, \overline{y}_{pr})$;

Step 15: determining, from pairs $(\overline{\theta}_{md}$ and $\sigma\theta_{rd}, \Delta \overline{\tau}_{md}$ and $\sigma_{\Delta r_{ref}})$ and $(\overline{\theta}_{pr}$ and $(\sigma_{\theta_{pr}}, \Delta \overline{\tau}_{pr}$ and $\sigma_{\Delta \tau_{pr}})$, the positions

of the ellipses of uncertainty of the emitters at position Em and the reflectors at position Rp.

4. A system for locating one or more emitters Ei in the potential presence of obstacles Rp in an array comprising at least one first receiving station A and a second receiving station B asynchronous with A, **characterised in that** it comprises at least one reference emitter $E_0$, the position of which is known, and a processor designed to implement the steps of the method according to any one of claims 1 to 3.

**Patentansprüche**

1. Verfahren zum Lokalisieren von einem oder mehreren Sendern Ei in potentieller Anwesenheit von Hindernissen Rp in einer Anordnung mit wenigstens einer ersten Empfangsstation A und einer zweiten Empfangsstation B asynchron zu A, **dadurch gekennzeichnet, dass** es wenigstens die folgenden Schritte beinhaltet:

   • Identifizieren eines Referenzsenders mit bekannter Position $E_0$ durch Berechnen des Paares AOA-TDOA ($\theta_{ref}$, $\Delta\tau_{ref}$) anhand der Kenntnis der Position $E_0$ des Referenzsenders und der der Stationen A und B,
   • Schätzen der Ankunftsrichtung des oder der Sender(s) und der Reflektoren (oder Schätzen von AOA) an der ersten Station A,
   • Trennen der an der ersten Station A empfangenen Signale durch räumliches Filtern in Richtung der Quelle (Sender und Hindernisse),
   • Trennen der von den Sendern stammenden Einfälle von den von den Hindernissen stammenden Einfällen durch Interkorrelation der von der räumlichen Filterung in A stammenden Signale,
   • Schätzen der Differenz von Ankunftszeit oder TDOA einer Quelle (Sender und Hindernisse) durch Interkorrelation des bei A empfangenen Signals von der Quelle (Sender und Hindernisse) mit den an der zweiten Empfangsstation B empfangenen Signalen: so wird für jede sendende Quelle Ei (oder Hindernisse Rj) ein Paar (AOA, TDOA) erhalten,
   • Synthetisieren der Messwerte der Paare (AOAi, TDOAi) jeder Quelle (Ei, Rp), um die Quellen zu nummerieren und die Mittelwerte und die Standardabweichung ihrer AOA- und TDOA-Parameter zu ermitteln,
   • Ermitteln des Synchronfehlers zwischen den Empfangsstationen A und B mittels des Referenzsenders $E_0$, dann Korrigieren dieses Fehlers an allen TDOAi der Paare (AOAi, TDOAi) aus der Synthese,
   • Ermitteln des Orientierungsfehlers der Empfangsstation A mittels des Referenzsenders $E_0$, dann Korrigieren dieses Fehlers an allen AOAi der Paare (AOAi, TDOAi) aus der Synthese,
   • Lokalisieren der verschiedenen Sender anhand jedes Paares (AOAi, TDOAi).

2. Verfahren nach Anspruch 1, **dadurch gekennzeichnet, dass** es wenigstens einen Schritt beinhaltet, in dem eine Unsicherheitsellipse von Standardabweichungsmesswerten von Parametern (AOA, TDOA) erstellt wird.

3. Verfahren nach Anspruch 1, **dadurch gekennzeichnet, dass** es die folgenden Schritte beinhaltet:

   Schritt 2: Initialisieren der Schritte $k$=1, $\Omega_d$ = Ø und $\Omega_r$ = Ø;
   Schritt 3: Anwenden, von Sensorsignalen x($t$), wie $(k-1)T \le t < kT$, einer Elementargoniometrie, die einen Satz von mit den direkten Wegen assoziierten Einfällen $\Theta_d = \{\theta_{1d}... \theta_{Md}\}$ und einen Satz von mit den reflektierten Wegen assoziierten Einfällen $\Theta_d = \{\theta_{1r}... \theta_{Pr}\}$ ergibt;
   Schritt 4: Anwenden, von den Sätzen $\Theta_d$ und $\Theta_r$ sowie den Sensorsignalen x(t), wie $(k-1)T \le t < kT$, einer Methode des Assoziierens der Ankunftswinkel und TDOA, um einen Satz von mit den direkten Wegen assoziierten AOA-TDOA-Paaren $\Psi_d = \bigcup_i \left\{ \left( \hat{\theta}_{id}, \Delta\tau_{id} \right) \right\}$ und einen Satz von mit den reflektierten Wegen assoziierten

   AOA-TDOA-Paaren $\Psi_r = \bigcup_i \left\{ \left( \hat{\theta}_{ir}, \Delta\tau_{ir} \right) \right\}$ zu erhalten;

   Schritt 5: $\Omega_d = \Omega_d \cup \Psi_d$ und $\Omega_r = \Omega_r \cup \Psi_r$;
   Schritt 6: $k$ = k + 1, wenn k < $K$, dann zurück zu Schritt 3;
   Schritt 7: Extrahieren, aus dem Datensatz $\Omega_d$, der Gesamtzahl M von Sendern sowie der Mittelwerte und der Standardabweichung der AOA-TDOA-Parameter jedes der direkten Wege, um

$$\overline{\Omega}_d = \bigcup_r \{(\overline{\theta}_{md} \quad \text{und} \quad \sigma_{\theta_{md}}, \Delta\overline{\tau}_{md} \quad \text{und} \quad \sigma_{\Delta r_{md}})$$

für $1 \leq m \leq M\}$, wobei $\overline{\theta}_{md}$ - und $\sigma_{\theta_{md}}$ die Mittelwerte und die Standardabweichung des Einfalls des $m^{ten}$ Senders sind und $\Delta\overline{\tau}_{md}$ und $\sigma_{\Delta r_{md}}$ die Mittelwerte und die Standardabweichung des TDOA dieses Senders sind, mit einer der Fachperson bekannten Technik;

Schritt 8: Extrahieren, aus dem Datensatz $Q_r$, der Gesamtzahl P von Reflektoren sowie der Mittelwerte und der Standardabweichung der AOA-TDOA-Parameter jedes der direkten Wege, um für $1 \leq p \leq P\}$ zu erhalten, wobei "-direkten Wege, um i dz und $\sigma_{\theta_{pt}}$, $\Delta\overline{\tau}_{pr}$ und $\sigma\overline{r}_{pr}$) für $1 \leq p \leq P\}$ zu erhalten, wobei $\overline{\theta}_{pr}$ und $\sigma_{\theta_{pr}}$ die Mittelwerte und die Standardabweichung des Einfalls des $p^{ten}$ Reflektors sind und $\Delta\overline{\tau}_{rd}$, und $\sigma_{\Delta r_{rd}}$ die Mittelwerte und die Standardabweichung des TDOA dieses Reflektors sind;

Schritt 9: Suchen in dem Satz $\overline{\Omega}_d$, anhand der Kenntnis des Einfalls $\theta_{ref}$ des Referenzsenders, des Einfalls $\overline{\theta}_{m_{rdd}}$, der $\theta_{ref}$ am nächsten liegt;

Schritt 10: Korrigieren des Orientierungsfehlers der Antenne durch Ausführen in den Sätzen $\overline{\Omega}_d$ und $\overline{\Omega}_r$: $\overline{\theta}_{rd} = \overline{\theta}_{rd} + (\theta_{ref} - \overline{\theta}_{m_{rdd}})$ und $\overline{\theta}_{pr} = \overline{\theta}_{pr} + (\overline{\theta}_{ref} - \overline{\theta}_{m_{refd}})$;

Schritt 11: Korrigieren des TDOA-Fehlers aufgrund des Asynchronismus der Empfänger bei A und B durch Ausführen in den Sätzen $\overline{\Omega}_d$ und $\overline{\Omega}_r$: und

Schritt 12: Berechnen, anhand der Kenntnis der mittleren Einfälle $\overline{\theta}_{mr}$ und $\overline{\theta}_{pr}$ und dann des Niveaus der Kalibrationsfehler, für jede der Quellen der mit den Kalibrationstypen verbundenen Standardabweichungen $\sigma_{\theta_{md}}^{cal}$ und $\sigma_{\theta_{pr}}^{cal}$;

Schritt 13: Korrigieren der Werte der Standardabweichungen der TDOA durch Ausführen in den Sätzen $\overline{\Omega}_d$ und $\overline{\Omega}_r$: $\sigma_{\theta_{ref}} = \sigma_{\theta_{md}} + \sigma_{\overline{\theta}_{ref}}^{cal}$ and $\sigma_{\theta_{pr}} = \sigma_{\theta_{pr}} + \sigma_{\theta_{pr}}^{cal}$;

Schritt 14: Ermitteln, anhand der Paare $(\overline{\theta}_{md}, \Delta\overline{\tau}_{md})$ und $(\overline{\theta}_{pr}, \Delta\overline{\tau}_{pt})$, der Positionen der Sender $E_m(\overline{x}_{md}, \overline{y}_{md})$ und der Reflektoren $R_P(\overline{x}_{pr}, \overline{y}_{pr})$;

Schritt 15: Ermitteln, anhand der Paare $(\overline{\theta}_{md}$ und $\sigma_{\theta_{md}}$ $\Delta\overline{\tau}_{ref}$ und $\sigma_{\Delta\tau_{nd}})$ und $(\overline{\theta}_{pr}$ und $\sigma_{\theta_{pr}}$, $\Delta\overline{\tau}_{pr}$ und $\sigma_{\Delta\tau_{pr}})$, der Positionen der Unsicherheitsellipsen der Sender an Position $E_m$ und der Reflektoren an Position $R_p$.

4. System zum Lokalisieren eines oder mehrerer Sender Ei in potentieller Anwesenheit von Hindernissen Rp in einer Anordnung mit wenigstens einer ersten Empfangsstation A und einer zweiten Empfangsstation B asynchron zu A, **dadurch gekennzeichnet, dass** es wenigstens einen Referenzsender $E_0$, dessen Position bekannt ist, und einen Prozessor zum Ausführen der Schritte nach einem der Ansprüche 1 bis 3 umfasst.

Réflecteur en R$_1$

Source en E$_1$

Source en E$_2$

E$_1$

E$_2$

$\theta_{111}$

$\theta_{120}$

$\theta_{110}$

A$_1$

A$_2$

## FIG.1

y

M

H

Hyperbole telle que

$$\Delta \tau_{12} = \frac{\|A_2 M\| - \|A_1 M\|}{c}$$

D

E$_1$

Droite telle que

$$\theta = angle\left(A_1 M, A_1 A_2\right)$$

A$_1$

A$_2$

x

## FIG.2

Emetteur n°2

Emetteur n°1

$K(\theta_{11})$ et $K(\theta_2)$
*Vecteurs
d'onde*

$K(\theta_2)$

$K(\theta_{11})$

$K(\theta_{12})$

$\theta_{11}$

$\theta_{12}$

Capteur
élémentaire

Traitement
d'antennes

Réseau
d'antennes

Ci

FIG.3

Plan des capteurs

$\theta_m$

$\Delta_m$

$k(\theta_m, \Delta_m)$

FIG.4

**FIG.5**

**FIG.6**

**FIG.7**

Chemins
cohérents

Chemins
Incohérents

Seuil_1er

θ (degrés)

# FIG.8

$\mathbf{a}(\theta, f_0)$ : Table de Calibration

Sources

5

Goniométrie
MUSIC Cohérent
D6

$\hat{\theta}_{mp,A_i}$

Trajet
réfléchi

$\hat{\theta}_{mr}$

Choix de l'algo de
goniométrie

Trajet
direct

$\hat{\theta}_{md}$

5

Tarage D1

Goniométrie avec
MUSIC
D4

$\hat{\theta}_{mp,A_i}$

5

Séparation des
trajets
C2

$h_i$ : Coefficients des filtres FIR de tarage

# FIG.9

**FIG.10**

**FIG.11**

Zone d'incertitude AOA

Zone d'incertitude AOA-TDOA

Zone d'incertitude TDOA

$2c\sigma_{\Delta\tau}$

$2\sigma_{\theta}$

$E_m$

$\theta$

A

B

$E_m$

$\varphi_m$

$\delta D_m^{max}$

$\delta D_m^{min}$

$\left(\delta D_m^{min}, \delta D_m^{max}, \varphi_m\right)$ : Paramètres de l'ellipse d'incertitude

FIG.12

**EP 2 215 492 B1**

**RÉFÉRENCES CITÉES DANS LA DESCRIPTION**

**Documents brevets cités dans la description**

- FR 0411448